# EUROPEAN PATENT APPLICATION

(11) **EP 2 460 933 A1**
(43) Date of publication of application: **06.06.2012**
(21) Application number: 11185168.9
(22) Date of filing: 14.10.2011
(51) Int. Cl.: D21B 1/32, D21D 1/30, D21F 9/00

(54) **Pulp making device of used paper recycling apparatus and used paper recycling apparatus**

(30) Priority: 06.12.2010 JP 2010272081
(71) Applicant: Seed Co. Ltd., Osaka-shi, Osaka (JP)
(72) Inventor: Tamai, Shigeru, Osaka-shi, Osaka (JP); Koyama, Yuji, Osaka-shi, Osaka (JP)
(74) Representative: Mounteney, Simon James

(57) **Abstract**

A pulp making technology for realizing a used paper recycling apparatus of furniture size that can be installed in a small shop, room or the like, having a beating machine provided with a pair of beating disks (41,42) disposed oppositely to each other in a relatively rotatable manner at a close distance, this beating machine has a tiny beating gap (R (60,61)), between the pair of beating disks (41,42), for executing the beating process of at least two continuous stages from a rough beating process to a finish beating process, and the beating gap (R (60,61)) starts at a supply port (50,45a) formed in a central part of the fixed side beating disk (42), and ends at a discharge port (51,45b) formed on the outer peripheral edge of the beating disks (41,42). Therefore, even in a very small beating process space (R (60,61)) contained in an apparatus space of furniture size, smooth and highly efficient beating of high processing capacity is realized without causing clogging of used paper.

## Description

### BACKGROUND OF THE INVENTION

### Field of the Invention

The present invention relates to a pulp making device of a used paper recycling apparatus and a used paper recycling apparatus, and more particularly to a pulp making technology in a small-sized used paper recycling apparatus of furniture size to be installed at a site of origin of used paper, for regenerating and processing into reusable paper at the site without discarding or disposing the generated used paper.

### Description of the Related Art

Used paper is produced every day, from our daily activities in government offices, companies, and general household, as waste paper or unnecessary documents. Usually, used paper is discarded as refuse, incinerated, or disposed in various manners.

On the other hand, in the background of an international heightened concern about effective utilization of limited resources on the earth, recently, various technologies have been researched and developed for recycling the used paper without discarding.

Most of these used paper recycling technologies are employed in the paper manufacturing industries, and the used paper recycling facilities require a wide area, a vast investment, and a huge volume of water and chemicals used in the paper making process, for the purpose of high-speed and mss production of recycled paper and high quality of paper same as in ordinary paper making facilities.

In recycling of used paper, collection of used paper by mass manual labor is needed, and collection of used paper involves various problems such as entry of foreign matter due to mass manual labor, defective sorting due to lack of knowledge about used paper recycling, or incomplete removal of debris, and if used paper is collected, recycling of used paper as 100% recycled paper requires final sorting by professionals and cleaning and other treatments. Besides , confidential documents and other private or secrete papers are hardly collected as used paper because of confidential problems, and most of them are processed by incineration, and are hardly recycled.

To solve these problems of used paper collection, it is effective to develop a technology of recycling privately at the site of origin of used paper, and from this point of view, the Applicant has already developed and proposed a used paper recycling apparatus as disclosed, for example, in Japanese Patent Laid-Open Publication No. 2010-180512.

This used paper recycling apparatus is realized as an apparatus so as to be installed in a small area in a small shop or a room of general household, based on the large-scale used paper recycling technology of used paper recycling plant or the like, and includes, in an apparatus case of furniture size, a pulp making unit for manufacturing used paper pulp by macerating and beating used paper, a paper making unit for manufacturing regenerated paper by making from the used paper pulp manufactured in the pulp making unit, and a control unit for driving and controlling the pulp making unit and the paper making unit in interlock, in which the pulp making unit is composed of a macerating unit for agitating and crushing the used paper, and a beating unit for beating the used paper macerated in this macerating unit.

In the beating unit, a used paper pulp circulation route is formed by disposing grinders for beating the used paper pulp. The grinders have beating action surfaces disposed oppositely across a tiny beating gap, and are provided with a pair of beating disks rotated and driven relatively, and also include gap adjusting means for adjusting the beating gap of the pair of beating disks.

The used paper is macerated and beaten and made into pulp by agitation of the macerating unit of the pulp making unit, and desired used paper pulp is formed as being further beaten and fibrillated by the beating unit, and is made into recycled paper in the paper making unit. In this case, in the beating unit, the used paper pulp beaten by the grinder is circulated in the used paper circulating route, and in this beating process, the beating gap of the beating disks is gradually narrowed from the initial phase to the final phase of the beating process, so that beating of a high efficiency is realized smoothly throughout the whole process of beating from the initial phase to the final phase.

### BRIEF SUMMARY OF THE INVENTION

It is a principal object of the present invention to present a pulp making device of a novel used paper recycling apparatus further improved from the conventional used paper recycling apparatus mentioned in the prior art.

It is other object of the present invention to provide a pulp making technology for realizing a used paper recycling apparatus of furniture size that can be installed not only in a large office, but also in a small shop or general household, especially by improving and simplifying the structural technology of the pulp making unit in the used paper recycling apparatus, and that is friendly to the environment, capable of suppressing the running cost low, capable of securely preventing leak or disclosure of confidential information, private information, and other data, and capable of maintaining a high confidentiality.

To achieve these objects, the pulp making device of the used paper recycling apparatus of the present invention is used in a used paper recycling apparatus of furniture size that can be installed at the site of origin of used paper, for manufacturing used paper pulp by macerating and beating used paper, including a macerating unit for macerating and beating used paper for manufacturing used paper pulp, and a beating unit for beating the used paper macerated in this macerating unit, in which the beating unit has a beating machine provided with at least a pair of beating disks disposed so as to be rotatable relatively at a close distance, and this beating machine has a tiny beating gap for executing beating processes of at least two continuous stages from the rough beating process to the finish beating process, provided between the pair of beating disks opposite to each other adjacently, and this beating gap starts from a supply port formed in a central part of the beating disks, and ends at a discharge port formed on the outer peripheral edge of the beating disks.

A preferred embodiment includes the following configurations.
(1) The beating gap is composed of at least two annular beating areas disposed concentrically between opposite sides of the pair of mutually opposite beating disks and separately in the radial direction, and the annular beating area at the innermost diameter side communicates with the supply port, and the annular bearing area at the outermost diameter side communicates with the discharge port.
(2) The beating gap is composed of two annular beating areas disposed concentrically between opposite sides of the pair of mutually opposite beating disks and separately in the radial direction, and
   the annular beating area at the inside diameter side communicates with the supply port to form a rough beating process area for beating roughly, and the annular beating area at the outside diameter side communicates with the discharge port to form a finish beating process area for beating finally.
(3) The beating gap is composed of three annular beating areas disposed concentrically on opposite sides of the pair of mutually opposite beating disks and separately in the radial direction, and
   the annular beating area at the innermost diameter side communicates with the supply port to form a rough beating process area for beating roughly, the annular beating area at the outermost diameter side communicates with the discharge port to form a finish beating process area for beating finally, and an annular beating area interposed between the annular beating areas at the innermost and outermost diameter sides communicates with the both beating areas to form a rough and finish beating process area for beating roughly and finally.
(4) In each annular beating area, a plurality of beating blades are disposed on the opposite sides of the pair of mutually opposite beating disks, at a specified arrangement pitch in a circumferential direction, and the blade tip interval of the mutually opposite beating blades is formed to be maximum in the blade tip interval in the annular beating area at the innermost diameter side, and minimum in the blade tip interval in the annular beating area at the outermost diameter side.
(5) The blade tip interval in the annular beating area at the outermost diameter side is set at a finish beating size for fibrillating the pulp.
(6) The beating machine includes a beating tub having the supply port for supplying the used paper pulp from the upstream side and the discharge port for discharging the beaten used paper pulp to the downstream side, at least a pair of beating disks provided in this beating tub in a mutually rotatable state, and a rotation drive source for rotating and operating these beating disks relatively, and the used paper pulp supplied from the supply port passes through the beating gap between the beating disks, and is pressed and beaten in the beating process of at least two continuous stages from the rough beating process to the finish beating process by the cooperative action of the mutually opposite beating blades.
(7) The beating machine includes a fixed side beating disk fixed at the inner side of the beating tub, a rotating side beating disk oppositely disposed rotatably on the fixed side beating disk, and a rotation drive source for rotating and driving this rotating side beating disk, and an inlet communicating with the supply port of the beating tub is formed in a central position of the fixed side beating disk, and an outer peripheral edge of the beating gap of the both beating disks is an outlet communicating with the discharge port of the beating tub.
(8) The beating machine includes a pair of fixed side beating disks fixed at both mutually opposite inner sides of the beating tub, a rotating side beating disk oppositely disposed rotatably on the both fixed side beating disks, between the both fixed side beating disks, and a rotation drive source for rotating and driving this rotating side beating disk, and an inlet communicating with the supply port of the beating tub is formed in a central position of the both fixed side beating disks, and an outer peripheral part of these three beating disks is an outlet communicating with the discharge port of the beating tub.
(9) In the beating unit, a used paper pulp circulation route is formed by disposing the beating machine for beating the used paper pulp, and this used paper pulp circulation route has circulation means for circulating the used paper pulp in the used paper pulp circulation route, and beating control means for controlling the beating machine and the circulation means by mutual interlock, and the beating control means controls the beating unit to circulate the used paper pulp for a specified time.
(10) The macerating unit includes a macerating tub having a used paper supply port for feeding and supplying used paper, a discharge port for discharging the macerated used paper pulp to the downstream side, and agitation means provided rotatably in this macerating tub, and the used paper supplied from the used paper supply port is mixed and agitated with water by the agitation means, and macerated and beaten.
(11) The macerating unit has water supply means for supplying water into the macerating tub.
(12) Shredder means is provided at the used paper supply port of the macerating tub, and the used paper supplied from the used paper supply port is preliminarily shredded by the shredder means, and is agitated by the agitation means.
(13) The used paper pulp circulation route includes the macerating tub of the macerating unit, and the agitation means of the macerating unit is driven and controlled in the operation of executing the beating process.
(14) The used paper pulp circulation route is provided with a bypass route including a reserve tub for storing the used paper pulp beaten by the beating machine being connected through changeover means, and the changeover means is driven and controlled so as to change over and use selectively the macerating tub of the macerating unit and the reserve tub of the bypass route, in the operation of executing the beating process.

The used paper recycling apparatus of the present invention includes, in an apparatus case of furniture size, a pulp making unit for macerating and beating used paper and manufacturing used paper pulp, a paper making unit for making the used paper pulp manufactured in this pulp making unit and manufacturing recycled paper, and a device control unit for driving and controlling the pulp making unit and the paper making unit in interlock, in which the pulp making unit is composed of the pulp making device described above.

A preferred embodiment includes pulp concentration adjusting means for adjusting the concentration of used paper pulp supplied into the paper making unit by adjusting the mixing rate of used paper and water supplied into the apparatus, and this pulp concentration adjusting means includes beating concentration adjusting means for adjusting the beating concentration of used paper pulp in the pulp making unit corresponding to the beating efficiency of the beating machine, paper making concentration adjusting means for adjusting the paper making concentration of the used paper pulp in the paper making unit corresponding to the finished paper quality of the recycled paper to be regenerated, and pulp concentration control means for driving and controlling the beating concentration adjusting means and the paper making concentration adjusting means in interlock.

According to the present invention, the beating unit for beating the used paper macerated in a previous process of the macerating unit has a beating machine provided at least with a pair of beating disks oppositely disposed relatively rotatably across a close distance, and this beating machine has a tiny beating gap for executing beating processes of at least two continuous stages from the rough beating process to the finish beating process, provided between the pair of beating disks opposite to each other adjacently, and this beating gap starts from a supply port formed in a central part of the beating disks, and ends at a discharge port formed on the outer periphery of the beating disks, and therefore even in a very small beating process space contained in the apparatus space of furniture size, beating having a smooth and highly efficient processing capacity can be realized without causing clogging with used paper.

That is, the paper quality of used paper to be macerated and beaten is varied and not uniform. In the used paper recycling plant of large size such as used paper recycling factory or large-scale used paper recycling apparatus, since a beating machine of a huge size and having a very strong power source is used for beating at an extremely high pressure and at a very fast rotation, used paper will flow abundantly and smoothly without being clogged in the beating gap of the beating machine, so that desired fibrillated used paper pulp may be manufactured.

By contrast, the beating machine of the used paper recycling apparatus of furniture size has various problems, that is, the demanded degree of fibrillation of used paper pulp is same as in the used paper recycling plant of large size, while the driving source of the beating machine is small, and the propulsion force of sending and passing the used paper pulp in the beating gap is small, and clogging is caused in the beating gap of used paper pulp by beating in such condition, and to prevent these problems, in the beating technology disclosed, for example, in patent document 1, as mentioned above, the beating gap of the beating disks in the grinding machine of the beating unit is narrowed gradually from the initial stage to the final stage of the beating process, that is, by controlling so that a desired degree of fibrillation may be realized while preventing clogging with the used paper pulp in the beating gap, by controlling the beating gap to be narrower gradually, while circulating and passing the used paper pulp plural times in the beating gap of the grinding machine.

In the present invention, between a pair of beating disks, a tiny beating gap for executing the beating process of at least two continuous stages from rough beating process to finish beating process is composed, and, for example, when executing the beating process of two continuous stages, a rough beating process is executed in the preceding beating gap, and a finish beating process is executed in the succeeding beating gap.

More specifically, the beating gap between the beating disks is set at a gap size corresponding to the fiber size of used paper pulp macerated in the preceding step of the macerating process in the beating process area of the first stage in early half of beating, and the used paper pulp is supplied into this beating gap from the supply port formed in a central area of the beating disks, and is beaten roughly, and is sent out outward in the radial direction by centrifugal force, and in the succeeding second stage area in latter half of beating, the gap size is determined so as to beat the fiber of used paper pulp to a desired finish size, that is, to fibrillate, and through finish beating process at high pressure; the used paper pulp is discharged from the discharge port, and finally used paper pulp of desired fiber size can be obtained. As a result, even in a very small beating process space, beating of smooth and highly efficient processing capacity is realized without causing clogging with used paper.

In addition, the used paper after the beating process is further composed into fiber level (made into pulp), and characters and diagrams printed in the paper are completely decomposed and destroyed, and cannot be restored, and leakage or disclosure of confidential information and private information contained in the characters and diagrams can be securely prevented, and a high confidentiality can be maintained.

Moreover, such smooth and efficient beating does not require a large power same as in the case of the beating technology disclosed in patent document 1, and it is particularly suitable to a used paper recycling apparatus of furniture size to be installed in a small office, shop, general household, and leakage and disclosure of various information printed in documents, from the private level of general household documents and personal letters, to the public level of confidential papers of government offices and companies can be prevented effectively securely, while the running cost can be kept low.

In the beating unit, a used paper pulp circulation route is formed by disposing the beating machine, and the macerating unit and the beating unit are arranged in a circulation system for circulating the used paper pulp for a specified time, so that beating of used paper pulp is executed efficiently depending on the purpose, and an optimum beating effect will be obtained.

In particular, because of the used paper recycling apparatus of furniture size, the used paper pulp beating process route of infinite length, basically not limited in length, can be formed in a very narrow process space, and in the used paper recycling apparatus of compact size of furniture size, a beating process space practically equal to the beating process in a large plant apparatus can be assured.

The used paper recycling apparatus employing this beating technology is very compact in the apparatus structure, and can be installed not only in a large office, but also in a small shop or general household, and from this viewpoint, too, leakage and disclosure of confidential information, private information, and various data can be prevented securely.

These and other purposes and features of the present invention will be better understood and clarified by reading the detailed description based on the accompanying drawings and novel facts disclosed in the claims as described below.

### BRIEF DESCRIPTION OF THE DRAWINGS

FIG. 1 is a front sectional view showing an overall outline configuration of a used paper recycling apparatus in Embodiment 1 of the present invention.
FIG. 2 is a side sectional view showing an overall outline configuration of the same used paper recycling apparatus.
FIG. 3 is a magnified front view showing a partial section of principal components of a beating unit of the same used paper recycling apparatus.
FIG. 4 is a magnified front view showing an internal structure of a beating machine as an important component part of the beating unit.
FIG. 5A is a front view showing a rotating side beating disk as a principal part of the beating machine.
FIG. 5B is a front view showing a partial section of a fixed side beating disk installed in a beating tub as a principal part of the same beating machine.
FIG. 6A is a sectional view showing a sectional structure of a rough beating process area in the beating gap of the same beating machine.
FIG. 6B is a sectional view showing a sectional structure of a finish beating process area in the beating gap of the same beating machine.
FIG. 7 is a circuit diagram showing a used paper pulp circulation route configuration of the same beating unit.
FIG. 8 is a block diagram showing a configuration of a pulp concentration adjustment unit of the same used paper recycling apparatus.
FIG. 9 is a block line diagram showing a control configuration of the same used paper recycling apparatus.
FIG. 10 is a perspective view showing an outline configuration of the same used paper recycling apparatus.
FIG. 11A is a front view showing a rotating side beating disk as a principal part of a beating machine of a used paper recycling apparatus in Embodiment 3 of the present invention.
FIG. 11B is a front view showing a partial section of a fixed side beating disk installed in a beating tub as a principal part of the same beating machine.
FIG. 12A is a sectional view showing a sectional structure of a rough beating process area in a beating gap of the same beating machine.
FIG. 12B is a sectional view showing a sectional structure of a medium-finish beating process area in the beating gap of the same beating machine.
FIG. 12C is a sectional view showing a sectional structure of a final-finish beating process area in the beating gap of the same beating machine.
FIG. 13 is a magnified front sectional view showing an internal structure of a beating machine of a used paper recycling apparatus in Embodiment 4 of the present invention.
FIG. 14 is a side sectional view showing an overall outline configuration of a used paper recycling apparatus in Embodiment 5 of the present invention.

### DETAILED DESCRIPTION OF THE PREFERRED EMBODIMENTS

The preferred embodiments of the present invention are specifically described below while referring to the accompanying drawings. Throughout the entire drawings, same reference numerals refer to same or similar components or elements.

### Embodiment 1

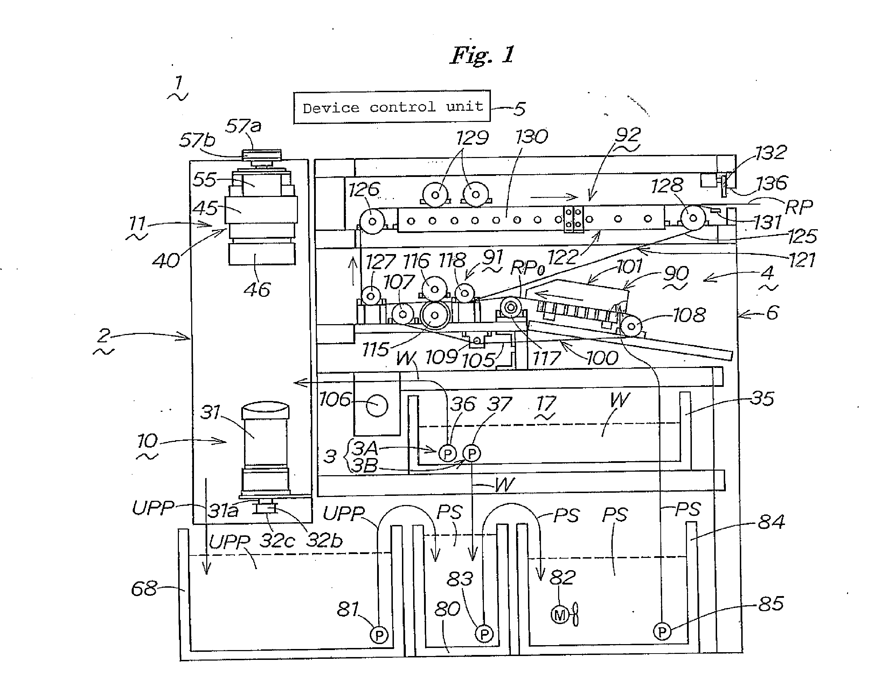

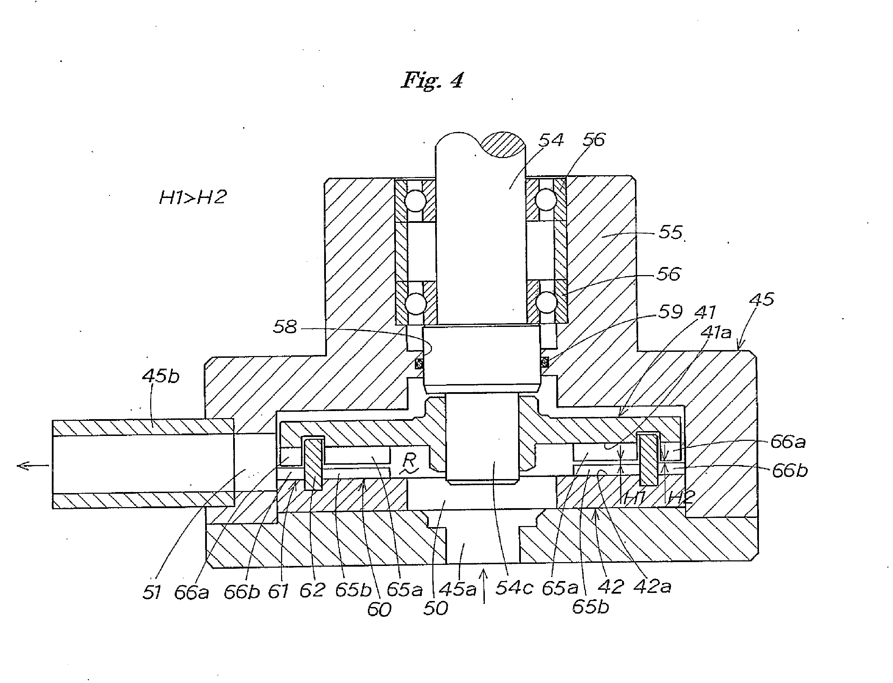

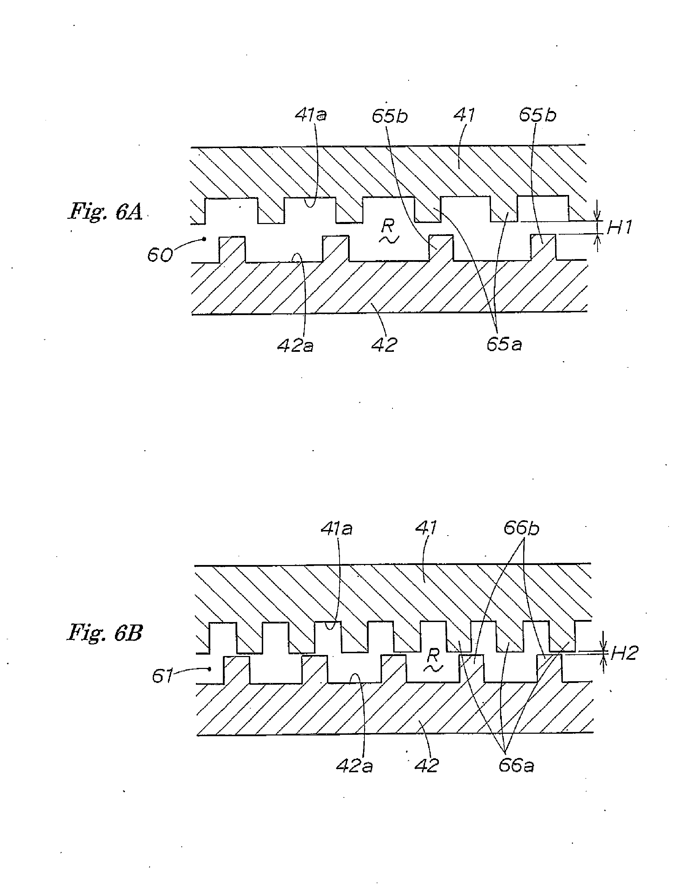

A used paper recycling apparatus of the present invention is shown in FIG. 1 to FIG. 10, and this used paper recycling apparatus 1 is specifically installed at the site of origin of used paper, and is an apparatus for processing into a recycled paper at the site without disposing or discarding the generated used paper UP, and the used paper UP includes confidential documents of government offices and private enterprises, and personal letters in general household and other unnecessary papers.

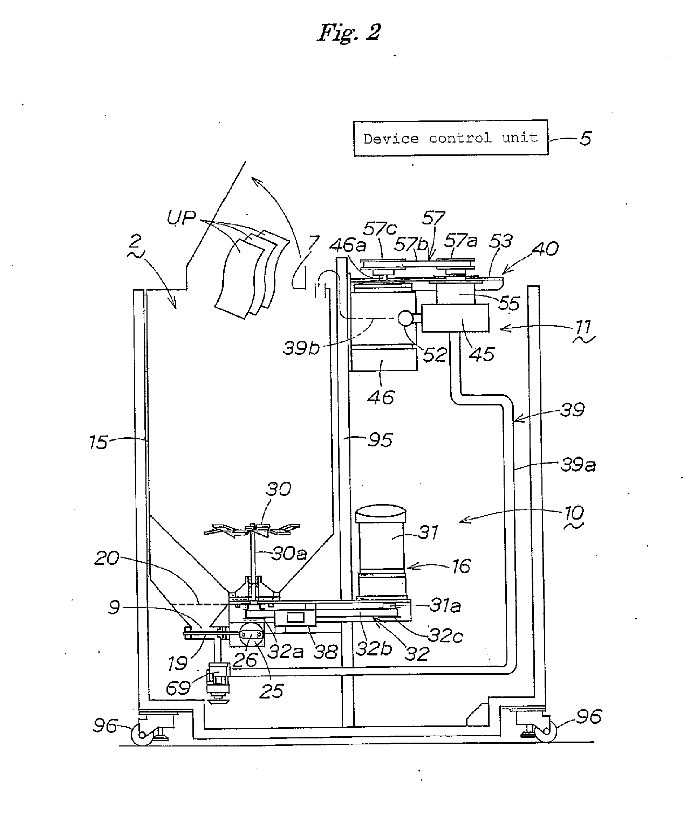

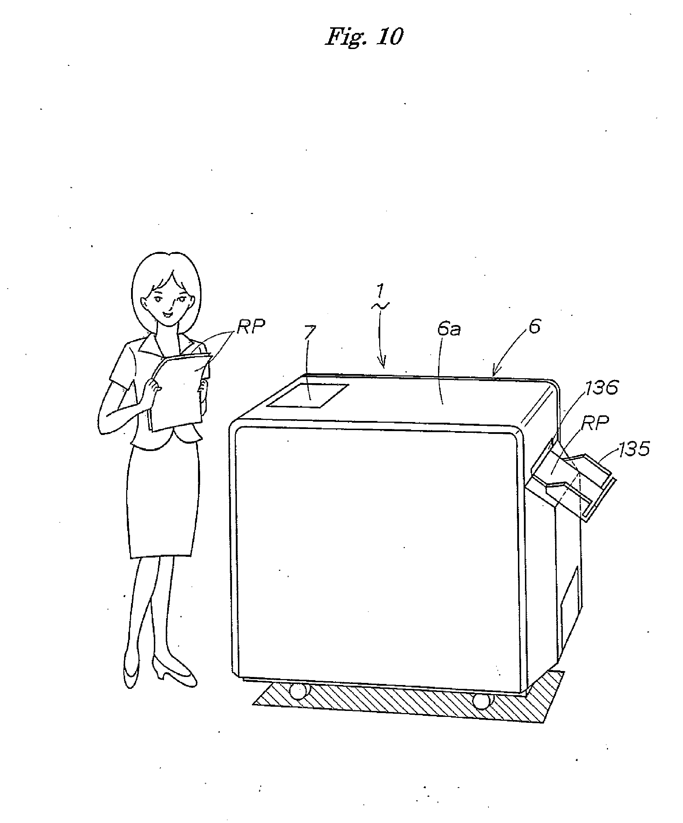

The used paper recycling apparatus 1 has a furniture size as shown in FIG. 10, that is, it is as small and compact as a general office tool, such as bookshelf, locker, desk, copier, personal computer, or other furniture, and as shown in FIG. 1 and FIG. 2, it is mainly composed of a pulp making unit 2, a pulp concentration adjusting unit (pulp concentration adjusting means) 3, a paper making unit 4, and a device control unit 5, and these components 2 to 5 are contained in an apparatus case 6, so that a compact design is realized.

The apparatus case 6 is a furniture size as mentioned above, and specific shapes and dimensions are designed appropriately depending on the purpose and application. The apparatus case 6 in the illustrated embodiment is shaped like a box of nearly same shape and size of a copier installed and used in an office, and its outer circumference is covered with a decorative case cover 6a. In the bottom of the apparatus case 6, casters 96, 96, ... are provided as moving means, so as to be movable in any direction on the floor of installation. The ceiling plate of the case 6 has a supply port 7, which can be opened and closed, for supplying used paper UP, and the side part has a detachable recycled paper receiving tray 135 for receiving recycled paper RP, RP, .... The recycled paper receiving tray 135 is opposite to a discharge port 136 of the apparatus case 6, and the recycled paper RP, RP, ... discharged from this discharge port 136 is sequentially received in layers.

The pulp making unit (pulp making device) 2 is a process location for macerating and beating used paper UP and manufacturing used paper pulp UPP, and has a macerating unit 10 and a beating unit 11.

The macerating unit 10 is a process location for agitating, grinding, and macerating the used paper UP, and is mainly composed of a macerating tub 15, an agitating device (agitating means) 16, and a water feed device (water feed means) 17.

The macerating tub 15 is shown in FIG. 2, in which the supply port (used paper supply port) 7 for feeding and supplying the used paper UP is provided in its ceiling wall, and a discharge port 9 for discharging the macerated used paper pulp UPP to the downstream side is provided in its bottom wall. The inner volume of the macerating tub 15 is determined depending on the number of sheets of used paper UP to be agitated and processed in a batch. In the illustrated embodiment, by adding about 98 liters of water, the macerating tub 15 has an inner volume enough to agitate and process about 500 sheets (about 2000 g) of used paper UP of A4 format PPC (plain paper copier) in batch (batch process). In this case, the concentration of the used paper pulp UPP to be macerated is about 2%. The concentration is adjusted by adding water from the water supply device 17, and this water supply device 17 forms a part of the pulp concentration adjusting unit (pulp concentration adjusting means) 3 to be explained later.

The supply port 7 has a structure to be opened and closed to the outside of the case cover 6a of the apparatus case 6. The discharge port 9 can be opened and closed by a closing valve 19, and communicates with a used paper pulp circulation route 39 described later. The location of the discharge port 9 is provided with a debris filter 20 for removing clips and staplers binding the used paper UP, UP, ..., and others which may disturb as obstacles in the next step of beating process.

The closing valve 19 is specifically opened and closed by crank operation of a crank mechanism 26 by a drive motor 25. The drive motor 25 is specifically an electric motor, and the drive motor 25 is electrically connected to the device control unit 5.

The agitating device 16 is disposed inside of the macerating tub 15, and includes an agitating impeller 30 and a drive motor 31.

The agitating impeller 30 has its rotation shaft 30a supported rotatably in upright position in a central position of the bottom of the macerating tub 15, and is provided to be rotatable horizontally, and the lower end of the rotation shaft 30a is driven and coupled to a rotation shaft 31a of the drive motor 31, by way of transmission means 32 composed of a transmission pulley 32a, a transmission belt 32b, and transmission pulley 32c.

In this manner, since the agitating impeller 30 is rotated normally and reversely, if the used paper UP is agitated directly in the size of A4 format, by the jet flow action of water by normal rotation and reverse rotation of the agitating impeller 30, the used paper UP is dispersed effectively, and entangling on the agitating impeller 30 may be prevented effectively.

The blade shape of the agitating impeller 30 is designed to be different in the agitation force (dispersion effect) between normal rotation and reverse rotation, so that the used paper UP, UP, ... may be macerated and beaten uniformly.

The changeover timing of normal rotation and reverse rotation of the agitating impeller 30, the agitation time, and other operation conditions are determined appropriately so as to obtain desired macerating and beating effects of the used paper UP, UP, ..., on the basis of the preliminary experiment data.

The water supply device 17 is for supplying water into the macerating tub 15, and composes, as described below, a beating concentration adjusting unit (beating concentration adjusting means) 3A of the pulp concentration adjusting unit (pulp concentration adjusting means) 3.

The water supply device 17 of the illustrated embodiment includes, as shown in FIG. 1, a white water collection tub 35, a water feed pump 36 for adjustment of beating concentration, and a water feed pump 37 for adjustment of paper making concentration. The white water collection tub 35 is to collect, as described below, white water W (pulp water of a very low concentration filtered through a paper making mesh in the paper making process) filtered and dewatered in the paper making unit 4, and the white water W collected in this white water collection tub 35 is supplied into the macerating tub 15 by means of the water feed pump 36, or into a concentration adjusting tub 80 mentioned below by means of the water feed pump 37.

In this relation, in the bottom of the macerating tub 15, a weight sensor 38 is provided, and the used paper UP, UP, ... and the amount of water to be processed in batch in the macerating tub 15 are measured and controlled, and the weight sensor 38 is electrically connected to the device control unit 5.

The weight sensor 38 in the illustrated embodiment is a load cell, which is composed to sense and measure the total weight of the weight of the macerating tub 15, and the weight of the used paper UP, UP, ... and water fed and supplied into this macerating tub 15.

In a specific control configuration in the macerating unit 10, first of all, the operator opens the supply port 7, and puts used paper UP, UP, ... into the macerating tub 15, and its weight is sensed and measured by the weight sensor 38, and when reaching a specified weight (number of sheets), it is noticed to the operator by sound and/or display. Responding to this display, the operator closes the supply port 7, and then the water supply device 17 is driven, and the water feed pump 36 operates to supply water W in the white water collection tub 35 into the macerating tub 15 by the volume corresponding to the weight (number of sheets) of the charged used paper UP, UP,

In the meantime, if the operator closes the supply port 7 after charging an arbitrary amount of used paper UP, UP, ... (smaller than the specified weight (number of sheets)) into the macerating tub 15 from the supply port 7, this weight is sensed and measured by the weight sensor 38, and the water supply device 17 is driven, and the water feed pump 36 operates to supply water W from the white water collection tub 35 into the macerating tub 15 by the volume corresponding to the measured result.

In the illustrated embodiment, as mentioned above, when A4 format PPC used paper UP is charged into the macerating tub 15 approximately by a maximum amount of 500 sheets (about 2000 g), at this moment, the operator is noticed by sound and/or display, and by the closing action of the supply port 7, about 98 liters of water is added from the water supply device 17, or if used paper UP, UP, ... is charged by an arbitrary amount (smaller than the specified weight (number of sheets)), the amount of water corresponding to this charged amount of used paper is added from the water supply device 17, and the concentration of the used paper pulp UPP to be macerated is controlled and adjusted to be about 2%.

In this manner, in the agitating device 16, the used paper UP, UP, ... supplied into the macerating tub 15 from the supply opening of the apparatus case 6 or from the supply port 7 is agitated and mixed with the water supplied from the water supply device 17 for a specified time (10 to 20 minutes in the illustrated embodiment), by normal and reverse rotation of the agitating impeller 30 by the drive motor 31, and then the used paper UP, UP, ... is macerated and beaten, and used paper pulp UPP is obtained.

Incidentally, the discharge port 9 of the macerating tub 15 is closed by the closing valve 19 during operation of the macerating unit 10, and flow of used paper UP or used paper pulp UPP from the macerating tub 15 into the used paper pulp circulation route 39 is prevented, while the supply port 7 is opened by the closing valve 19 during operation of the beating unit 11 described below, thereby allowing flow and circulating pass of used paper pulp UPP from the macerating tub 15 into the used paper pulp circulation route 39.

The beating unit 11 is a process location for beating the used paper UP macerated in the macerating unit 10, and includes a beating machine 40 as a principal component, and more specifically, the used paper UP macerated in the macerating unit 10 is pressed, beaten and fibrillated, and ink particles forming characters and diagrams on the used paper UP (including ink particles of printing ink forming characters and diagrams on the used paper UP by various printing technologies, and ink forming characters and graphics formed on the used paper UP by pencil, ball-point pen, fountain pen, and other writing tools) can be ground and fibrillated.

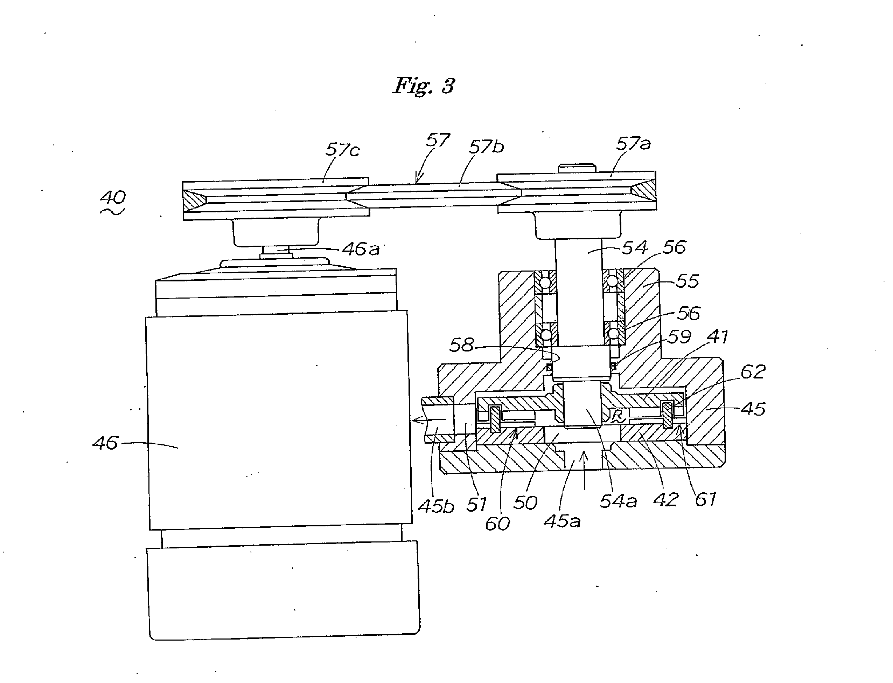

Specific configurations of the beating machine 40 are shown in FIG. 3 to FIG. 6. This beating machine 40 is formed as a so-called disk refiner mainly comprising at least one pair of (one pair in the illustrated case) of beating disks 41, 42 rotated and driven relatively, and the beating disks 41, 42 are disposed oppositely and rotatably concentrically at a very close distance, that is, across a very tiny beating gap R.

The beating machine 40 in the illustrated embodiment is mounted and fixed on an apparatus machine body 95 for composing the apparatus case 6 by way of an apparatus platform 53, and is disposed adjacently to the macerating tub 15 of the macerating unit 10, and as shown in FIG. 3, it is composed of a beating tub 45 communicating with the macerating tub 15 of the macerating unit 10, a pair of beating disks 41, 42 disposed relatively and rotatably in this beating tub 45, and a rotation drive source 46 for rotating the pair of beating disks 41, 42 relatively, and it is formed as a vertical type having the axial center of the beating disks 41, 42 formed in a vertical upright position.

The beating tub 45 is formed in a closed cylindrical shape for accommodating the pair of upper and lower beating disks 41, 42, and is provided with a supply port 45a for supplying used paper pulp UPP from the upstream side, and a discharge port 45b for discharging the beaten used paper pulp UP to the downstream side.

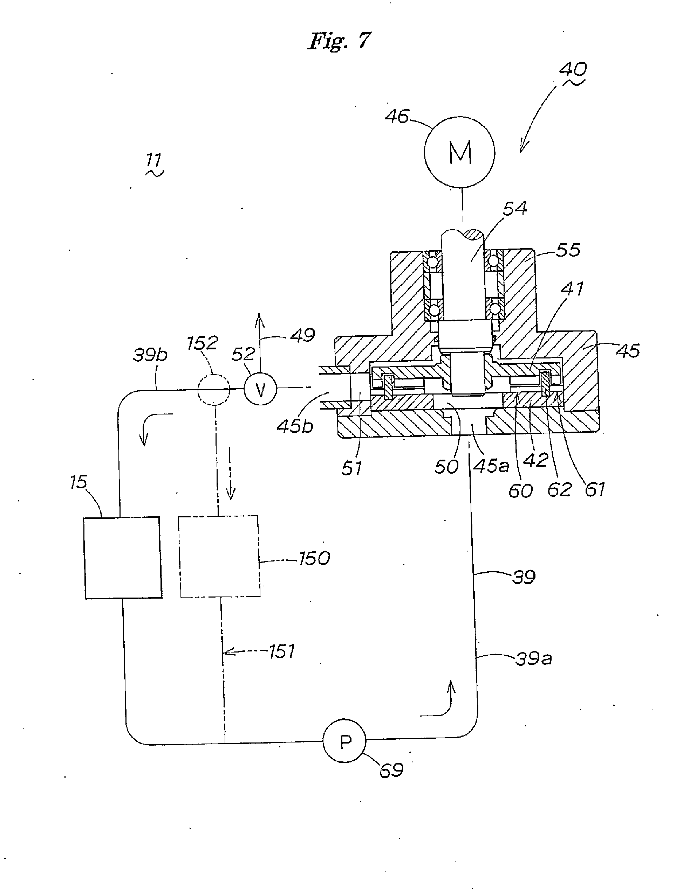

More specifically, the supply port 45a is opened toward the vertical direction in the central area of the bottom of the beating tub 45, and the discharge port 45b is opened toward the horizontal direction at the cylindrical side of the beating tub 45. The supply port 45a and the discharge port 45b are connected so as to be communicated to the macerating tub 15 of the macerating unit 10 by way of circulation pipings 39a, 39b as shown in FIG. 2 and FIG. 7, and the discharge port 45b further communicates with a used paper pulp collection tub 68 by way of a discharge piping 49.

One of the pair of upper and lower beating disks 41, 42 is a fixed side beating disk fixed and disposed in the rotational direction, and the other is a rotatable rotating side beating disk, and in the illustrated embodiment, the upper beating disk 41 is the rotating side, and the lower beating disk 42 is the fixed side. The component material of the beating disks 41, 42 is preferably stainless steel or stainless cast steel high in hardness and excellent in wear resistance. In the illustrated embodiment, a stainless steel material is used.

The fixed side beating disk 42 at the lower side is fixed on the inner side of the bottom of the beating tub 45 by appropriate fixing means (not shown), and opposite to this fixed side beating disk 42, the rotating side beating disk 41 at the upper side is oppositely disposed rotatably and concentrically across a tiny beating gap R.

This fixed side beating disk 41 is driven by and coupled to a drive motor 46 by way of a rotational main shaft 54.

The rotating main shaft 54 is rotatably supported on a bearing unit 55 of an integral structure with the beating tub 45 by means of bearings 56, 56, and its leading end part 54a is connected to the rotating side beating disk 41 concentrically and integrally by appropriate fixing means (not shown), and its base end part 54b is driven by and coupled to a rotational shaft 46a of the drive motor 46 as the rotation drive source by transmission means 57 composed of a transmission pulley 57a, a transmission belt 57b, and a transmission pulley 57c.

The drive motor 46 is specifically an electric motor, and the drive motor 46 as its driving source is electrically connected to the device control unit 5.

The leading end part 54a of the rotational main shaft 54 is opposite to the inside of the beating tub 45 by way of an opening 58 in the center of the ceiling of the beating tub 45, and the interval of the opening 58 and the rotational main shaft 54 is kept light-tight by means of a proper sealing member 59 such as O-ring or seal ring.

Between opposite sides 41a, 42a of the upper and lower beating disks 41, 42, a tiny beating gap R is formed as mentioned above, and this beating gap R starts from the supply port 45a formed in the central area of the fixed side beating disk 42, and ends at the discharge port 45b formed on the outer peripheral edge of the both beating disks 41, 42.

That is, in this beating gap R, in a central area of the fixed side beating disk 42, an inlet 50 is formed so as to be inserted coaxially into the supply port 45a of the beating tub 45, and an outlet 51 formed so that the outer periphery of the both beating disks 41, 42 may communicate with the discharge port 45b of the beating tub 45.

The beating gap R is designed to execute the continuous beating process of at least two stages (two stages are shown in the drawing) from rough beating process to finish beating process.

That is, the beating gap R is composed of at least two (two in the drawing) annular beating areas 60, 61 disposed separately concentrically and in the radial direction, by means of a partition wall 62 disposed between the opposite sides 41a, 42a of the pair of opposite beating disks 41, 42, and the annular beating area 60 of the innermost diameter side communicates with the supply port 45a, and the annular beating area 61 of the outermost diameter side communicates with the discharge port 45b.

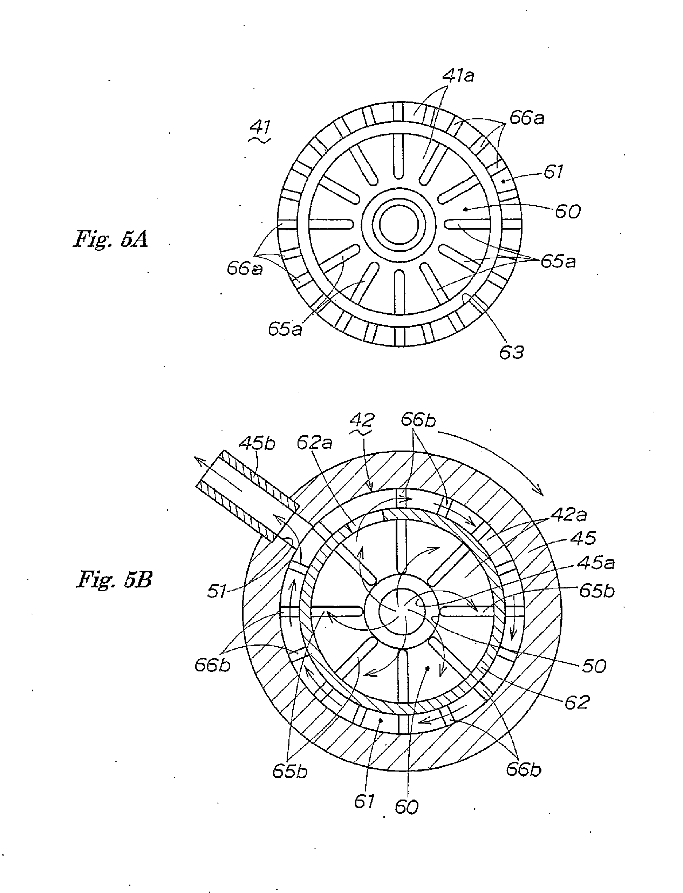

The partition wall 62 is made of an annular ring member. This ring member 62 is shown in FIG. 5B, and has a notch 62a formed in part, and is fixed concentrically with the beating disk 42 at the opposite side 42a of the fixed side beating disk 42. On the other hand, a ring groove 63 corresponding to this ring member 62 is provided on the opposite side 41a of the rotating side beating disk 41. This rink groove 63 is engaged with the ring member 62 in a relatively slidable and rotatable manner, and partition walls for dividing and forming the annular beating areas 60, 61 are formed, and a communication port for communicating the both annular beating areas 60, 61 is formed by the notch 62a.

The configuration relation of the communication port 62a and the outlet 51 in the circumferential direction is shown in FIG. 5B, and more specifically they are deviated and disposed slightly relatively in the counterclockwise direction, in the flow direction of the used paper pulp UPP caused by relative rotation of the beating disks 41, 42, that is, in the clockwise direction indicated by the arrow in the illustrated embodiment.

Owing to such configuration and structure, the used paper pulp UPP flowing in the annular beating area at the inside diameter side, that is, in the annular beating area 60 opposite to the annular beating area 61, and in the annular beating area 61 opposite to the outlet 51 will flow, at least in the corresponding beating areas, into the beating area of the outside diameter side, after once flowing one circle in the circumferential direction.

The beating gap R in the illustrated preferred embodiment is composed of two annular beating areas 60, 61 disposed separately concentrically and in the radial direction between the opposite sides 41a, 42a of the pair of opposite beating disks 41, 42, and the annular beating area 60 of the inside diameter side is a first-stage beating process area in an early half of beating, and communicates with the supply port 45a, thereby forming a rough beating process area for beating roughly, and the annular beating area 61 of the outside diameter side is a second-stage beating process area in a latter half of beating, and communicates with the discharge port 45b, thereby forming a finish beating process area for beating finally.

The rough beating process area 60 for beating roughly is designed to have a larger volume than the finish beating process area 61 for beating finally. In these annular beating areas 60, 61, the opposite sides 41a, 42a of the pair of mutually opposite beating disks 41, 42 are formed on flat planes, and on the opposite sides 41a, 42a, a plurality of beating blades 65a, 65b, ... and 66a, 66b, ... are disposed at specified arrangement pitches in the circumferential direction.

In the illustrated preferred embodiment, these beating blades 65a, 65b, ... and 66a, 66b, ... are extended straightly in the radiation direction as shown in FIG. 5A and FIG. 5B, and a layout configuration pattern is formed, but the layout configuration pattern of these beating blades may be set appropriately depending on the purposes including the condition of execution.

The beating blades 65a, 65b, ... and 66a, 66b, ... of the layout configuration pattern as in the illustrated preferred embodiment apply both a centrifugal force acting on the used paper pulp UPP flowing and passing in the annular beating areas 60, 61 by rotation of the rotating side beating disk 41, and a pumping action for extruding the used paper pulp UPP continuously to outside of the radiation direction.

The blade tip interval H of these opposite beating blades 65a, 65b, ... and 66a, 66b, ... is maximum at the blade tip interval H1 in the annular beating area at the innermost diameter side (rough beating process area in this preferred embodiment) 60, and minimum at the blade tip interval H2 in the annular beating area at the outermost diameter side (finish beating process area in this preferred embodiment) 61.

The blade tip interval H2 in the annular beating area at the outermost diameter side (finish beating process area in this preferred embodiment) 61 is set at a finish beating size capable of fibrillating the used paper pulp UPP.

In this structure, by the drive motor 46 of the drive source, the rotating side beating disk 41 is rotated and driven at high speed (1800 rpm to 3600 rpm) on the fixed side beating disk 42, and the used paper pulp UPP supplied and flowing in from the supply port 45a flows and passes in the clockwise direction (see arrow) in FIG. 5B in the beating gap R (rough beating process area 60 and finish beating process area 61) between the beating disks 41, 42, and is pressed and beaten in a continuous beating process of at least two stages (two stages in the illustrated preferred embodiment) from rough beating process (rough beating process area 60) to finish beating process (finish beating process area 61) through cooperative actions of the mutually opposing beating blades 65a, 65b, ... or beating blades 66a, 66b, ....

Specifically, in the rough beating process area 60, the blade tip interval H1 of the beating blades 65a, 65b, ... is set at an interval size corresponding to the fiber size of the used paper pulp UPP macerated in the previous step of macerating process (for example, about 1.00 mm), and the used paper pulp UPP supplied into the rough beating process area 60 through the inlet 50 from the supply port 45a of the fixed side beating disk 42 is roughly beaten by the beating blades 65a, 65b, ..., and is sent out to the outside in the radial direction by the action of the centrifugal force and the pump action of the beating blades 65a, 65b, ..., and flows into the finish beating process area 61 by way of a communication port 62a.

In this finish beating process area 61, the blade tip interval H2 of the beating blades 66a, 66b, ... is set at an interval size capable of beating the used paper pulp UPP to fiber size of specified finish size, that is, fibrillating size (for example, about 0.05 to 0.1 mm), and the used paper pulp UPP supplied into the finish beating process area 61 from the rough beating process area 60 through the communication port 62a is pressed and beaten by the beating blades 66a, 66b, ..., and is sent out to the outside in the radial direction by the action of the centrifugal force and the pump action of the beating blades 66a, 66b, ..., while being beaten finally at high pressure, and is discharged from the outlet 51 and from the discharge port 45a, and is finally fibrillated to a specified size defined by the blade tip internal H2 of the beating blades 66a, 66b, ..., and used paper pulp UPP is obtained.

The blade tip intervals H1, H2 are determined appropriately depending on the purpose including specific conditions of execution, in consideration of the layout configuration pattern of beating blades 65a, 65b, ... and 66a, 66b, ..., and other design conditions.

In the beating unit 11 of the preferred embodiment, as shown in FIG. 7, the beating machine 40 is disposed and the used paper pulp circulation route 39 is formed, so that the used paper pulp UPP is circulated through the beating machine 40 in a loop of circulation and beating for a specified time.

By execution of the beating process by this used paper pulp circulation route 39, in spite of a very small and narrow space of used paper pulp beating process in the apparatus case 6 of furniture size, the beating process route is formed in an infinite length basically not limited in length, and together with the effect of the cooperative action with the beating machine 40 in this configuration, the beating process space is substantially equal to the beating process in a used paper recycling plant of a huge size such as used paper recycling factory or a large-scale used paper recycling apparatus, and optimum beating effects are obtained depending on the purpose.

Reference numeral 52 is a direction changeover valve, and by the change-over operation of this direction changeover valve 52, the used paper pulp UPP discharged from the discharge port 45b is selectively returned to the macerating tub 15, or collected in the used paper pulp collection tub 68. The direction changeover valve 52 is specifically an electromagnetic opening valve, and is electrically connected to the device control unit 5.

That is, as shown in FIG. 7, the used paper pulp circulation route 39 includes circulation pipings 39a ad 39b, and is formed in a loop by way of the macerating tub 15 of the macerating unit 10, the circulation pump (circulation means) 69, and the beating machine 40, and in the midst of the circulation piping 39b, a discharge piping 49 communicating with the used paper pulp collection tub 68 is branched and connected by way of the direction changeover valve 52.

The used paper pulp macerated and processed in the macerating unit 10 is then circulated in the used paper pulp circulation route 39 by means of the circulation pump 69, and is sent into the beating process including the beating machine 40. In this case, the circulation time of the used paper pulp UPP is a sufficient time until the used paper pulp UPP macerated and processed in the macerating unit 10 is pressed and beaten by the beating machine 40 to become fibers of used paper pulp UPP of desired finish size (to be fibrillated), and in the illustrated preferred embodiment, the time is set so that the used paper pulp UPP macerated and processed in the macerating unit 10 may pass the beating machine 40 two times.

The used paper pulp UPP circulated for a specified time is discharged from the discharge port 45b of the beating machine 40 by the changeover operation of the direction changeover valve 52, and is collected in the used paper pulp collection tub 68.

The used paper pulp circulation route 39 includes the macerating tub 15 of the macerating unit 10, and therefore when the beating process is executed, the agitating device 16 of the macerating unit 10 is driven and controlled, and the macerating unit 10 is driven simultaneously with the beating unit 11.

That is, in the circulation system beating process, the used paper pulp UPP flows out from the macerating tub 15 into the used paper pulp circulation route 39, while the used paper pulp UPP beaten by the beating machine 40 flows into the macerating tub 15, and therefore in the macerating tub 15, used paper pulp UPP of various degrees of beating is mixed. Hence, by the agitating action by the agitating device 16, the beating degree of the used paper pulp UPP in the macerating tub 15 is made uniform, and the beating process is promoted.

The used paper pulp collection tub 68 is a location for collecting the used paper pulp UPP beaten and fibrillated to a specified size by the beating unit 11, and the used paper pulp UPP collected herein is sent into the pulp concentration adjusting unit (pulp concentration adjusting means) 3 to be mixed and adjusted to pulp suspension PS in the paper making concentration corresponding to the finish paper quality of the recycled paper RP to be regenerated, and is sent into the paper making unit 4 in the next step of paper making process.

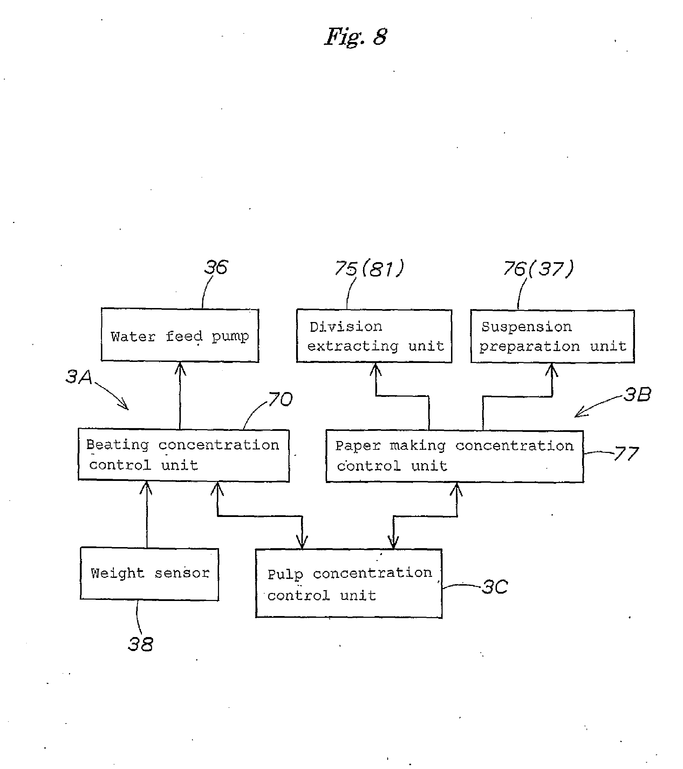

This pulp concentration adjusting unit 3 operates in the weight system, that is, the mixing rate of the used paper UP and water W charged into the apparatus is adjusted by measuring the weight, and the concentration of the used paper pulp UPP supplied into the paper making unit 4 is adjusted, and more specifically as shown in FIG. 8, it includes a beating concentration adjusting unit (beating concentration adjusting means) 3A, a paper making concentration adjusting unit (paper making concentration adjusting means) 3B, and a pulp concentration control unit (pulp concentration control means) 3C.

The beating concentration adjusting unit 3A adjusts the beating concentration of the used paper pulp UPP in the pulp making unit 2 corresponding to the beating efficiency by the beating unit 11, and, as explained above, is mainly composed of a water feed pump 36 for adjusting the beating concentration of the water feed device 17, and a beating concentration control unit 70.

The supply amount of white water W by the water feed pump 36 of the beating concentration adjusting unit 3A is preferably set, for example, so that the beating concentration of the used paper pulp UPP macerated and beaten by the agitating device 16 may be the maximum concentration allowed by the beating ability of the beating machine 40 of the beating unit 11 for executing the next step of beating process, and in the illustrated preferred embodiment, as mentioned above the beating concentration is set at about 2%.

The beating concentration control unit 70 drives and controls the water feed pump 36 so as to supply water into the macerating tub 15 by a required amount depending on the measuring result from a weight sensor 38. The beating concentration control unit 70 forms a part of the device control unit 5 as described below.

The paper making concentration adjusting unit 3B is for adjusting the paper making concentration of the used paper pulp UPP in the paper making unit 4 to an appropriate concentration corresponding to the finish paper quality of the recycled paper RP to be regenerated, and more specifically the concentration of the used paper pulp UPP manufactured in the pulp making unit 2 is adjusted by the division system, and it mainly includes a division extracting unit (division extracting means) 75, a suspension preparing unit (suspension preparing means) 76, and a paper making concentration control unit (paper making concentration control means) 77.

The division extracting unit 75 is for dividing and extracting a specified small portion from the whole volume of used paper pulp UPP manufactured in the previous step of the pulp making unit 2, and includes a used paper pulp supply pump 81 for division and extraction for extracting the used paper pulp UPP in the used paper pulp collection tub 68, and sending to a concentration adjusting tub 80.

The suspension preparing unit 76 is for preparing a pulp suspension of a specified concentration by adding a necessary volume of concentration adjusting water to a specified small portion of used paper pulp divided and extracted by the division extracting unit 75, and includes the water feed pump 37 of the water supply device 17 as a principal component.

Although not shown specifically, in the bottom of the concentration adjusting tub 80, a weight sensor of load cell is provided same as in the macerating tub 15 described above, and the amount of the used paper pulp UPP and the concentration adjusting water supplied into the concentration adjusting tub 80 is measured and controlled, and this weight sensor is electrically connected to the device control unit 5.

The paper making concentration control unit 77 is for controlling the division extracting unit 75 and the suspension preparing unit 76 by interlock, and forms a part of the device control unit 5, and interlocks and controls the pumps 81, 37 of the division extracting unit 75 and the suspension preparing unit 76 so as to execute the following paper making concentration adjusting process.

More specifically, first, from the whole volume of used paper pulp UPP collected in the used paper pulp collection tub 68 from the beating unit 11 (in the illustrated preferred embodiment, about 2000 g of used paper UP + 1000 liters of water W), a specified portion (1 liter in the illustrated preferred embodiment) of used paper pulp UPP is divided by the used paper pulp supply pump 81, and is transferred and contained in the concentration adjusting tub 80. As a result, its weight is sensed and measured by the weight sensor, and its result is sent to the device control unit 5.

In succession, corresponding to the divided specified portion of the used paper pulp UPP, a specified volume of diluting water W (in the illustrated preferred embodiment, 9 liters, actually as weighed and measured by the weight sensor) is supplied into the concentration adjusting tub 80 from the while water collection tub 35 by the water feed pump 37.

As a result, in the concentration adjusting tub 80, the used paper pulp UPP of beating concentration (2% in the illustrated preferred embodiment) is mixed and diluted with water W, and pulp suspension PS of specified concentration (in the illustrated preferred embodiment, about 0.2% concentration (target concentration)) is mixed and prepared.

This target concentration of the pulp suspension PS to be prepared herein is set in consideration about the paper making ability in the paper making unit 4 described below, on the basis of the data of the preliminary experiment, at about 0.2% concentration, as mentioned above in the illustrated preferred embodiment.

In this manner, the pulp suspension PS prepared to the paper making concentration (0.2%) of target concentration in the concentration adjusting tub 80 is transferred and supplied to the pulp supply tub 84 from the concentration adjusting tub 80 by a first suspension supply pump 83, and is preserved to wait for the next step of the paper making unit 4. Hereinafter, this paper making concentration adjusting process is similarly repeated and executed about the whole volume of used paper pulp UPP in the used paper pulp collection tub 68. The pulp supply tub 84 is also provided with a second suspension supply pump 85 for sending the pulp suspension PS to a paper making process unit 90 of the paper making unit 4.

The agitating device 82 is provided in the pulp supply tub 84, and by the agitating action of the of the agitating device 82, the paper making concentration of the entire pulp suspension PS waiting and stored is held uniformly at a specified value.

The pulp concentration control unit 3C is for driving and controlling by interlock with the beating concentration adjusting unit 3A and the paper making concentration adjusting unit 3B, and specifically receiving pulp concentration control information (charged amount of used paper UP, water feed amount to macerating tub 15, beating concentration of used paper pulp UPP, etc.) from the beating concentration control unit 70 of the beating concentration adjusting unit 3A, depending on this control information, to adjust the concentration of the used paper pulp UPP manufactured in the pulp making unit 2 to the target value (paper making concentration), the paper making concentration control information (target paper making concentration of used paper pulp UPP, division extraction amount of used paper pulp UPP from the used paper pulp collecting tub 68, water feed amount to the concentration adjusting tub 80, etc.) is transmitted to the paper making concentration control unit 77 of the paper making concentration adjusting unit 3B, and thereby the paper making concentration adjusting process mentioned above is executed.

The paper making unit 4 is a process location for manufacturing recycled paper RP from the used paper pulp UPP manufactured in the pulp making unit 2, and it mainly includes a paper making process unit 90, a dewatering roll unit 91, and a drying process unit 92.

The paper making process unit 90 is a location for making wet paper from slurry pulp suspension PS mixed with water W and used paper pulp UPP sent from the pulp supply tub 84 of the pulp making unit 2, and it mainly includes a paper making conveyor 100 and a pulp supply unit 101.

The paper making conveyor 100 is for making and conveying the pulp suspension, and a mesh belt 105 of paper making mesh structure composed of numerous mesh cells for filtering and dewatering the pulp suspension PS is disposed so as to run straightly toward its running direction.

More specifically, the paper making conveyor 100 includes the mesh belt 105 in an endless belt form for making and conveying the pulp suspension PS, and a drive motor 106 for driving and feeding the mesh belt 105.

The plate material of paper making mesh structure for composing the mesh belt 105 is made of a material capable of filtering and dewatering the pulp suspension PS appropriately by numerous mesh cells of the paper making mesh structure, and preferred materials are polypropylene (PP), polyethylene terephthalate (PET), polyamide (PA) (generally called Nylon, a registered trademark), stainless steel (SUS), and other corrosion resistant materials, and in the illustrated preferred embodiment, a PET mesh belt 105 excellent in heat resistance is used.

The mesh belt 105 is, as shown in FIG. 1, suspended and supported rotatably by way of a drive roller 107, a driven roller 108, a support roller 109, a dewatering roll 115, and a preliminary dewatering roll 117, and is driven by and coupled to the drive motor 106 by way of the drive roller 107.

The running speed of the mesh belt 105 is determined in consideration of the conditions in the paper making process, and is preferably set at about 0.1 m/min to 1 m/min, and in the illustrated preferred embodiment, it is set at 0.2 m/min. Incidentally in the conventional used paper recycling plant of a huge factory size, the running speed of the paper making belt of this type is set at least higher than 100 m/min, and a highest version may exceed 1000 m/min by far.

The mesh belt 105 is, as shown in FIG. 1, designed to run straightly in an upward inclination toward its running direction, and in the limited space of installation, the paper making process length is extended as long as possible, and the filtering and dewatering rate is enhanced in relation to the paper making mesh structure of the mesh belt 105.

The drive motor 106 for driving and feeding the mesh belt 105 is specifically an electric motor, and is electrically connected to the device control unit 5. This drive motor 106 is commonly used as the drive source of the dewatering roll 91 and the drying process unit 92 as described later.

The pulp supply unit 101 is a location for supplying pulp suspension PS onto the mesh belt 105 from the pulp making unit 2, and by this pulp supply unit 101, the pulp suspension PS is uniformly spread and supplied on the upper surface of the mesh belt 105. The pulp supply unit 101 is provided at a starting end position of the paper making process of the paper making conveyor 100.

A specific structure of the pulp supply unit 101 is not shown, but a basic structure is, for example, as shown in Japanese Patent Application Laid-Open No. 2007-308837.

The pulp suspension PS supplied from the pulp supply tub 84 into the pulp supply unit 101 by means of the second suspension supply pump 85 is stored by a specified amount in the pulp supply unit 101, and by the cooperative action of its staying action and the running action of the mesh belt 105, it is diffused uniformly on the upper surface of the mesh belt 105. The pulp suspension PS diffused uniformly on the upper surface of the mesh belt 105 is conveyed together with the mesh belt 105 by the running action of the mesh belt 105 in the arrow direction, and is dewatered by the gravity filtering action of the mesh cells of the mesh belt 105, and wet paper RP₀ is formed.

The white water W filtered and dewatered by the mesh belt 105 (pulp water of very low concentration filtered by the paper making mesh in the paper making process) is collected in the white water collection tub 35 of the water supply device 17 as mentioned above.

The dewatering roll unit 91 is a location for pressing and dewatering the wet paper RP₀ on the mesh belt 105, at a linkage position of the above-mentioned paper making process unit 90 and the drying process unit 92 described below.

Specifically, a smooth surface belt 125 of the drying process unit 92 at the downstream side and the mesh belt 105 of the paper making process unit 90 at the upstream side are disposed in upper and lower layers as shown in FIG. 1, and the upper and lower joining portions of the smooth surface belt 125 and the mesh belt 105 form the linkage position, and the dewatering roll unit 91 rolls and presses the mesh belt 105 and the smooth surface belt 125 from both upper and lower sides.

A specific structure of the dewatering roll unit 91 is not shown, but a basic structure is, for example, as shown in Japanese Patent Application Laid-Open No. 2007-308837. That is, the dewatering roll unit 91 mainly includes a dewatering roll 115, a press roll 116, and a drive motor 106, and its auxiliary parts include a preliminary dewatering roll 117, and a slurry preventive roll 118.

The dewatering roll 115 rolls on the mesh belt 105 from the lower side, and although not shown specifically, a dewatering layer of a porous material of fine continuous pores is wound on the outer circumference of a cylindrical roll made of a high-rigid material.

The press roll 116 rolls and presses the smooth surface belt 125 of the drying process unit 92 described below from the upper side, and specifically it is a cylindrical roll made of a high-rigid material. In the illustrated preferred embodiment, the press roll 116 is a stainless steel cylindrical roll.

The dewatering roll 115 and the press roll 116 are specifically driven by and coupled to a single drive motor 106, and the both rolls 115, 116 are rotated and driven in cooperation. In this case, the both rolls 115, 116 are rotated and controlled so that the outer circumferential sides of the both rolls 115, 116 may roll and contact with each other mutually across a small rotating speed difference, to the contact surfaces of the mesh belt 105 and the smooth surface belt 125 rolled and pressed in pinched state at the outer circumferential sides (the lower surface of the mesh belt 105 and the upper surface of the smooth surface belt 125).

More specifically, the rotating speed of the press roll 116 is set slightly higher than the rotating speed of the dewatering roll 115, so that the running speed of the smooth surface belt 125 is set higher than the running speed of the mesh belt 105. In this configuration, while the wet paper RP₀ pressed and dewatered by the dewatering roll unit 91 is transferred and moved from the upper surface of the mesh belt 105 at the lower side to the lower surface of the smooth surface belt 125 at the upper side, a tension is applied to the wet paper RP₀, and creasing of the wet paper RP₀ is effectively prevented.

In addition, the drive motor 106 is commonly used with the drive motor of the paper making process unit 90 in the illustrated preferred embodiment.

By driving of this drive motor 106, the both rolls 115, 116 roll and press the both belts 105, 125 from both upper and lower sides with pressure, and the moisture contained in the wet paper RP₀ on the mesh belt 105 is sucked and removed by the dewatering roll 115 by way of the mesh belt 105. The pressed and dewatered white water W is collected in the white water collection tub 35 of the water supply device 17.

The preliminary dewatering roll 117 and the slurry preventive roll 118 are provided in order to assist the pressing and dewatering action of the press roll 116 and the dewatering roll 115 in the dewatering roll unit 91.

The preliminary dewatering roll 117 is, as shown in FIG. 1, disposed so as to apply a tension by rolling on the mesh belt 105 from the lower side, at the upstream side of the dewatering roll unit 91.

A specific structure of the preliminary dewatering roll 117 is not shown, but is similar to that of the dewatering roll 115, that is, a dewatering layer of a porous material of fine continuous pores is wound on the outer circumference of a cylindrical roll made of a high-rigid material.

The wet paper RP₀ diffused uniformly on the upper surface of the mesh belt 105, and conveyed together with this mesh belt 105 is filtered and dewatered by the mesh belt 105, and is also absorbed and dewatered at the same time by the preliminary dewatering roll 117, thereby assisting preliminarily the pressing and dewatering action by the press roll 116 and the dewatering roll 115.

The slurry preventive roll 118 is, as shown in FIG. 1, disposed so as to press the smooth surface belt 125 on the wet paper RP₀ on the mesh belt 105 at the lower side, by rolling and pressing the smooth surface belt 125 from the upper side, at a position near the upstream side of the dewatering roll unit 91.

The wet paper RP₀ pressed and dewatered by the dewatering roll unit 91 is rolled and transferred on the lower surface of the smooth surface belt 125 at the upper side from the upper surface of the mesh belt 105 at the lower side, at a location at the downstream side of the dewatering roll unit 91, and is conveyed together with the smooth surface belt 125, and then the drying process by the drying process unit 92 is executed.

In the meantime, this transfer action is estimated to be caused by the smooth surface structure of the smooth surface belt 125. That is, the surface of the mesh belt 105 at the lower side is a fine rough surface having multiple fine continuous pores, while the surface of the smooth surface belt 125 at the upper surface is a pore-less smooth surface, and hence the wet paper RP₀ containing a slight moisture is considered to be attracted by the surface tension with the surface of the smooth surface belt 125.

The drying process unit 92 is a location for obtaining recycled paper RP by drying the wet paper RP₀ pressed and dewatered in the dewatering roll unit 91, after being made and formed in the paper making process unit 90, and it mainly includes a drying conveyor 121 and a heating and drying unit 122.

The drying conveyor 121 is for smoothing and conveying the wet paper RP₀ pressed and dewatered in the dewatering roll unit 91, and includes the smooth surface belt 125, and the drive motor 106 for driving and feeding the smooth surface belt 125.

The smooth surface belt 125 is for conveying the wet paper RP₀ while heating and drying, and more specifically it is an endless belt made of plate materials of smooth surface structure having a specified width, connected and formed in a loop shape of a specified length. The plate materials of smooth surface structure can finish the one surface of the wet paper RP₀ in an appropriate smooth surface, and are made of materials capable of withstanding heating by the heating action and drying unit 122 mentioned below, and preferred materials are flexible heat resistant materials such as fluoroplastic or stainless steel, and a fluoroplastic belt is used in the illustrated preferred embodiment.

The smooth surface belt 125 is, as shown in FIG. 1, suspended and supported rotatably by way of a drive roller 126, driven rollers 127, 128, a press roll 116, a slurry preventive roll 118, and smooth surface finishing rolls 129, 129, and is driven by and coupled to the drive motor 106.

The drive motor 106 for feeding and driving the smooth surface belt 125 is commonly used as the feeding and driving source of the paper making conveyor 100 and the dewatering roll unit 91 as mentioned above.

The heating and drying unit 122 is a location for heating and drying the wet paper RP₀ on the smooth surface belt 125, and includes, as a heating unit, a heater plate 130 disposed on the way of the running route of the smooth surface belt 125.

On the way of the running route of the smooth surface belt 125, moreover, the two smooth surface finishing rolls 129, 129 are provided as mentioned above, and the wet paper RP₀ on the smooth surface belt 125 is sequentially rolled and pressed, and the one side and the other side of the wet paper RP₀ contacting with the surface of the smooth surface belt 125 are finished to appropriate smooth surfaces.

At the downstream side of the heating and drying unit 122 on the smooth surface belt 125, a peeling member 131 is provided. This peeling member 131 is specifically a heat-resistant elastic spatula,'and the dried paper being dried and conveyed on the smooth surface belt 125, that is, recycled paper RP is sequentially peeled off from the holding surface of the smooth surface belt 125.

In this relation, a fixed size cutter unit 132 is provided at the terminal end position of running route of the smooth surface belt 125 at the downstream side of this peeling member 131. The recycled paper RP peeled off from the smooth surface belt 125 is cut by this fixed size cutter 132 into a specified size (in the illustrated preferred embodiment, A4 format size), and recycled paper RP of reusable size is prepared, and discharged from a discharge port 136 of the apparatus case 6.

The device control unit 5 is for controlling automatically by mutually interlocking the operations of the drive units of the pulp making unit 2, the pulp concentration adjusting unit 3, and the paper making unit 4, and is specifically composed of a microcomputer made of CPU, ROM, RAM, and I/O port.

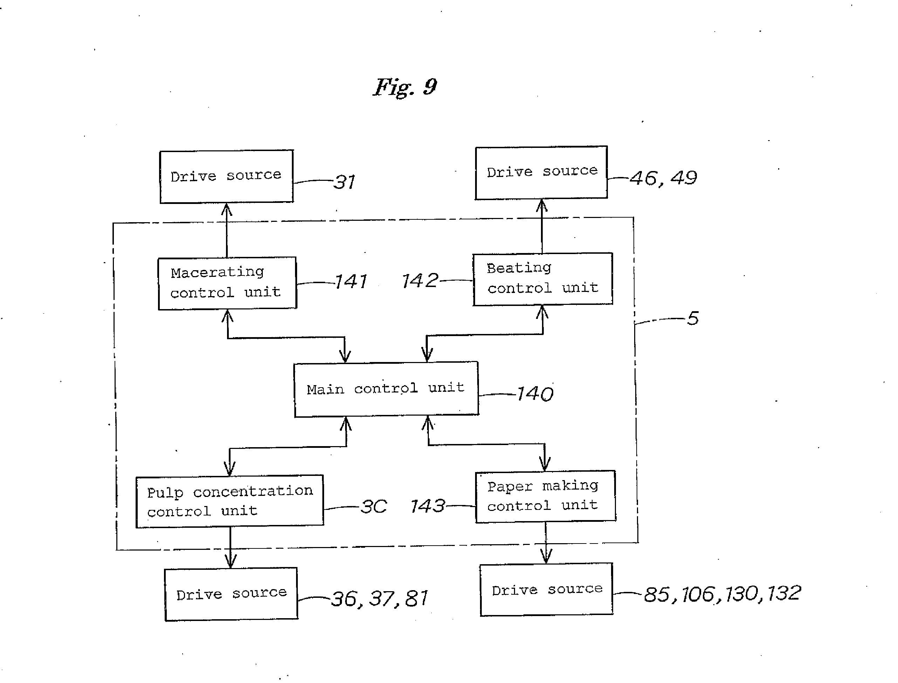

The device control unit 5 stores programs for executing the pulp making process of the pulp making unit 2, the concentration adjusting process of the concentration adjusting unit 3, and the paper making process of the paper making unit 4 by interlocking mutually, and as shown in FIG. 9, is composed of a principal control unit 140, a macerating control unit 141 for controlling the drive source 31 of the macerating unit 10 (16), a beating control unit 142 for controlling the drive sources 46, 69 of the beating unit 11 (40), a pulp concentration control unit 3C for controlling the drive sources 36, 37, 81 of the pulp concentration adjusting unit 3 (3A, 3B), in the pulp making unit 2, and a paper making control unit 143 for controlling the drive sources 85, 106, 130, 132 of the paper making process unit 90, the dewatering roll unit 91 and the drying process unit 92, in the paper making unit 4.

The principal control unit 140 stores various information necessary for driving of the drive units 2 (10, 11), 3 (3A, 3B), 4 (90, 91, 92), for example, the driving time and rotating speed of the agitating device 16 in the macerating unit 10, the water feed timing and water feed amount of the water feed device 17, the driving time and circulation amount of the circulation pump 69 in the beating unit 11, the driving time and rotating speed of the beating machine 40, the running speed of the conveyors 100, 121 in the paper making unit 4, the driving time of the heating and drying unit 122, and the operation timing of the fixed size cutter 132, preliminarily as data or selective inputs properly entered from the keyboard, and according to these control data, receiving detection results from the weight sensor 38, the position detection sensor, and others described above, and thereby the control units 141, 142, 3C, and 143 are controlled.

The used paper recycling apparatus 1 having such configuration is started when the power source is turned on, and the drive units 2 (10, 11), 3 (3A, 3B), and 4 (90, 91, 92) are automatically controlled in mutual relation by the device control unit 5, and the used paper UP, UP, ... charged into the inlet 7 of the apparatus case 6 are macerated and beaten by the macerating unit 10 and the beating unit 11 of the pulp making unit 2, and used paper pulp UPP is manufactured, and then pulp suspension PS of paper making concentration is prepared in the pulp concentration adjusting unit 3, and this pulp suspension PS is manufactured in the paper making process unit 90, the dewatering roll unit 91, and the drying process unit 92 in the paper making unit 4, and is regenerated as recycled paper RP, and is discharged into the recycled paper receiving tray 135 from the discharge port 136 of the apparatus case 6.

In the pulp making unit 2, the drive units are controlled automatically by mutual interlock by means of the macerating control unit 141 and the beating control unit 142, and the following processes are executed.
i) The worker charges a specified number of sheets (about 500 sheets (about 2000 g) in the illustrated preferred embodiment) of A4 format PPC used paper UP into the macerating tub 15 as mentioned above, and closes the inlet 7 after being noticed by sound and/or display, and then about 98 liters of water is supplied from the water supply device 17.
ii) The agitating device 16 is driven, and the used paper UP, UP, ... charged into the macerating tub 15 agitated and missed for a specified time in the water supplied from the water feed device 17 by normal and reverse rotation of the agitating impeller 30 by the drive motor 31, and the used paper UP, UP, ... are macerated and beaten to become used paper pulp UPP.
iii) By driving of the agitating device 16 for a specified time, the used paper UP, UP, ... become used paper pulp UPP, and then the inlet of the macerating tub 15 is opened by the opening valve 19, and the macerating tub 15 communicates with the used paper pulp circulation route 39, and the circulation pump 69 and the beating machine 40 of the beating unit 11 begin to be driven.

As the agitating device 16 of the macerating unit 10 is driven, the used paper pulp UPP remaining in the macerating tub 15 and the used paper pulp UPP returning to the macerating tub 15 are agitated, and the used paper pulp UPP in the macerating tub 15 is beaten uniformly, so that the beating process is promoted.
iv) In FIG. 7, the used paper pulp UPP macerated and processed in the macerating unit 10 is circulated in the used paper pulp circulation route 39 by the circulation pump 69, and is beaten and processed by the beating machine 40 (beating process).

The circulation time of the used paper pulp UPP is a sufficient time for pressing and beating the used paper pulp UPP macerated and processed by the macerating unit 10 by the beating machine 40 to become fibers used paper pulp UPP of specified finish dimension (to be fibrillated) as described above, and in the illustrated preferred embodiment, the time is set so that the used paper pulp UPP macerated and processed by the macerating unit 10 may pass the beating machine 40 two times.

The used paper pulp UPP circulated for a specified time is pressed and beaten by the beating machine 40, and fibrillated to a specified fiber size.
v) The direction changeover valve 52 of the used paper pulp circulation route 39 is changed over, and the used paper pup UPP discharged from the beating machine 40 is discharged and collected in the used paper pulp collecting tub 68 by way of the discharge piping 49.
x) The used paper pulp UPP collected in the used paper pulp collecting tub 68 is adjusted so that its concentration may be the target appropriate paper making concentration by division system as described above by the beating concentration adjusting unit 3B of the pulp concentration adjusting unit 3, and is sent to the next step of paper making process 4, and paper is made.

The used paper recycling apparatus 1 having such configuration brings about the following characteristic effects.
(1) The beating unit 11 for beating the used paper UP macerated in the previous process of the macerating unit 10 has a beating machine 40 having a pair of beating disks 41, 42 disposed oppositely in a relative rotatable manner at a close distance, and this beating machine 40 is provided with a tiny beating gap R for executing the rough beating process and finish beating process continuously, between the pair of beating disks 41, 42 opposing to each other adjacently, and this beating gap R starts at the supply port 50 formed in a central part of the fixed side beating disk 42, and ends at the discharge port 51 formed on the outer peripheral edge of the upper and lower beating disks 41, 42, and therefore even in a very small beating process space contained in an apparatus space of furniture size, smooth and highly efficient beating of high capacity is realized without causing clogging of used paper UP.

That is, the quality of the used paper UP to be macerated and beaten is varied and not uniform. In a used paper recycling factory such as large-scale used paper recycling plant or large-scale used paper recycling apparatus, a beating machine of large size having a very powerful driving source is used, and beating is executed at an extremely high pressure and high rotating speed, a huge amount of used paper flows smoothly without causing clogging in the beating gaps of the beating machine, and used paper pulp UPP fibrillated to a desired fiber size can be manufactured.

By contrast, in the beating machine 40 of the preferred embodiment, the tiny beating gap R (rough beating process area 60 and finish beating process area 61) for executing the rough beating process and finish beating process is formed between the pair of upper and lower beating disks 41, 42, and this beating gap R starts at the supply port 50 formed in a central part of the fixed side beating disk 42, and ends at the discharge port 51 formed on the outer peripheral edge of the upper and lower beating disks 41, 42, and the beating gap (blade tip interval H1) of the rough beating process area 60 is set at an interval dimension corresponding to the fiber size of the used paper pulp UPP macerated in the previous step of the macerating process 10, and the used paper pulp UPP is supplied into this rough beating process area 60 from the supply port 50 of the fixed side beating disk 42, and sent out to the outer side in the radial direction by centrifugal force, while being beaten roughly, and successively the beating gap (blade tip interval H2) of the finish beating process area 61 is set at an interval dimension capable of beating to the specified finish fiber size of the used paper pulp UPP, that is, enough for fibrillating, so as to be discharged from the discharge port 51 through the finish beating process at high pressure, and finally used paper pulp UPP of desired fiber size is obtained. As a result, without causing clogging of used paper, smooth, efficient and powerful beating is realized in a very small space of the beating process.

The used paper UP after the beating process is decomposed to fiber level (to be pulp), and the characters and diagrams printed therein are completely eliminated and cannot be restored, and leak or disclosure of confidential information or personal information composed of these characters and diagrams can be securely prevented, and a high confidentiality is assured.
(2) Moreover, large power is not needed for such smooth and efficient beating, and it is particularly suited to a used paper recycling apparatus of furniture size to be installed in a small shop, general household, or any room, leak or disclosure of confidential information or personal information written or printed in personal letters, official documents, confidential public and private papers, and others can be effectively and securely prevented, and the running cost can be kept low at the same time.
(3) In the beating unit 11, the used paper pulp circulation route 39 including the beating machine 40 is formed, and the macerating unit 10 and the beating unit 11 are connected to circulate the used paper pulp UPP for a specified time, and the used paper pulp UPP is beaten efficiently according to the purpose, so that an optimum beating effect will be obtained.

### Embodiment 2

This preferred embodiment is indicated by double-dot chain line in FIG. 7, in which only the structure of the beating unit 11 of the pulp making unit 2 in Embodiment 1 is modified.

That is, in the beating unit 11 of this preferred embodiment, the used paper pulp circulation route 39 is connected with a bypass route 151 including a reserve tub 150 for storing the used paper pulp UPP beaten by the beating machine 40, by way of a direction changeover valve 152 as changeover means. The direction changeover valve 152 is specifically an electromagnetic closing valve, and is electrically connected to a beating control unit 142 of the device control unit 5.

The beating control unit 142 drives and controls the direction changeover valve 152 so as to change over and use the macerating tub 15 of the macerating unit 10 and the reserve tub 150 of the bypass route 151, when executing the beating process of Embodiment 1.

More specifically, in the beating process of Embodiment 1, the used paper pulp UPP flowing out into the used paper pulp circulation route 39 from inside of the macerating tub 15 by the circulation pump 69 is beaten and processed by the beating machine 40, and, without returning to the macerating tub 15, flows from the direction changeover valve 152 into the reserve tub 150 of the bypass route 151, and this state is held until all of used paper pulp UPP in the macerating tub 15 flows out. When the used paper pulp UPP in the macerating tub 15 completely flows out, the direction changeover valve 152 is changed over, and this time, the used paper pulp UPP flowing out from the reserve tub 150 to the used paper pulp circulation route 39 is beaten and processed by the beating machine 40, and, without returning to the reserve tub 150, flows from the direction changeover valve 152 into the macerating tub 15 of the used paper pulp circulation route 39, and this state is held until all of used paper pulp UPP in the reserve tub 150 flows out. Hereinafter, the changeover operation of the direction changeover valve 152 is repeated.

In this manner, the two reserve tubs 15, 150 are used alternately, in the circulation system beating process of this preferred embodiment, it is possible to avoid a circumstance in which the used paper pulp UPP flows out from the macerating tub. 15 (or the reserve tub 150) into the used paper pulp circulation route 39, while the used paper pulp UPP once beaten by the beating machine 40 flows into the macerating tub 15 (or the reserve tub 150), and as a result, in macerating tub 15 (or the reserve tub 150), used paper pulp UPP of different degrees of beating is not mixed, unlike Embodiment 1, it is not necessary to drive the agitating device 16, and the beating process efficiency is enhanced as compared with the beating process in Embodiment 1.

The other structures and actions are same as in Embodiment 1.

### Embodiment 3

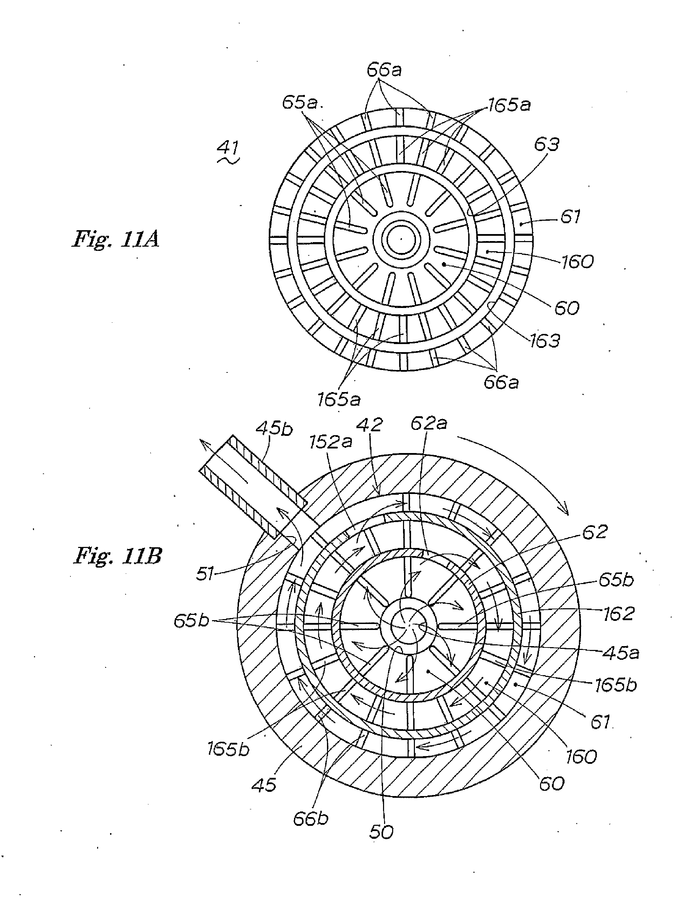

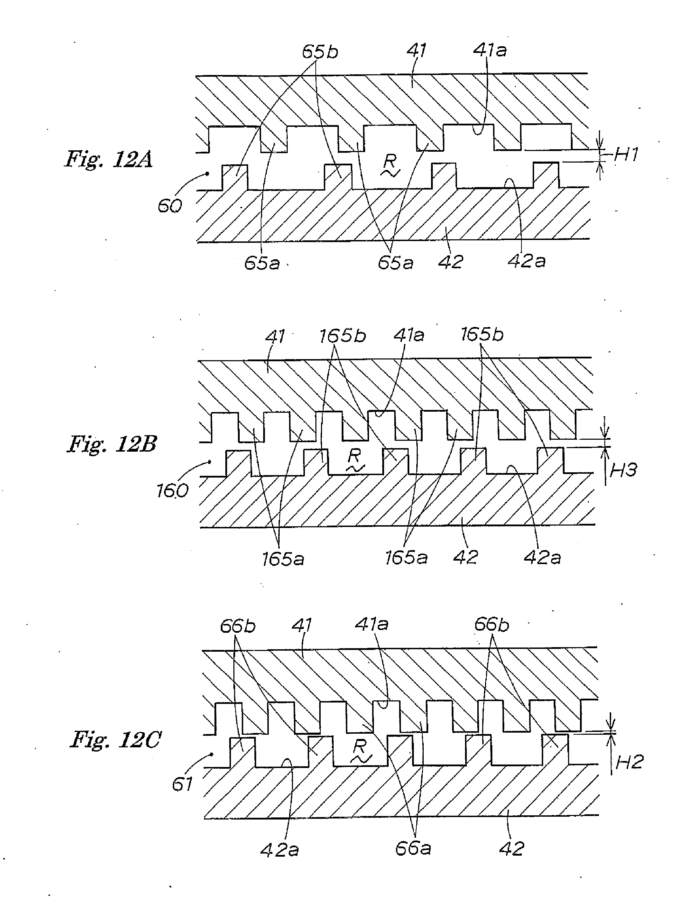

This preferred embodiment is shown in FIG. 11 and Fig. 12, in which only the structure of the beating machine 40 of the pulp making unit 2 in Embodiment 1 is modified.

That is, the beating machine 40 of this preferred embodiment includes, same as in Embodiment 1, a pair of beating disks 41, 41 rotated and driven relatively as principal components, and these beating disks 41, 42 are disposed oppositely concentrically and in a relatively rotatable manner across a tiny beating gap R.

The beating gap R formed between opposite sides 41a, 42a of the pair of upper and lower beating disks 41, 42 starts at the supply port 45a formed in a central part of the fixed side beating disk 42, and ends at the discharge port 45b formed on the outer peripheral edge of the both beating disks 41, 42.

The beating gap R is designed to execute three continuous beating processes from the rough beating process to the finish beating process.

More specifically, the beating gap R is formed of three annular beating areas 60, 160, 61 disposed concentrically and separately radially by two division walls 62, 162 provided between opposite sides 41a, 42a of the pair of opposite beating disks 41, 42, and the annular beating area 60 at the innermost diameter side communicates with the supply port 45a, and the annular beating area 61 at the outermost diameter side communicates with the discharge port 45b.

The division walls 62, 162 are made of annular ring members, and these ring members 62, 162 are, as shown in FIG. 11B, provided with notches 62a, 162a in part, and are fixed concentrically with the beating disk 42 on the opposite side 42a of the fixed side beating disk 42.

On the other hand, ring grooves 63, 163 corresponding to these ring members 62, 162 are provided on the opposite side 41a of the rotating side beating disk 41. In these ring grooves 63, 163, the ring members 62, 162 are relatively fitted slidably and rotatably, and division walls for dividing and forming the annular beating areas 60, 160, 61 are formed, and by the notches 62a, 162a, communication ports for communicating the three annular beating areas 60, 160, 61 are formed respectively,

The configuration relation of these communication ports 62a, 162a and the outlet 51 in the circumferential direction is shown in FIG. 11B, in which they are deviated and disposed slightly in the counterclockwise direction relatively, to the flow direction of the used paper pulp UPP caused by relative rotation of the beating disks 41, 42, that is, in the clockwise direction indicated by arrow in the illustrated preferred embodiment.

By such configuration and layout, the used paper pulp UPP flowing in the annular beating area at the inside diameter side, that is, the annular beating area 60 corresponding to the annular beating area 160, the annular beating area 160 corresponding to the annular beating area 61, and the annular beating area 61 corresponding to the outlet 51, finally flows into the beating area of the outside diameter after flowing one revolution at least in the circumferential direction in this beating area.

The beating gap R in the illustrated preferred embodiment is divided into the annular beating area 60 at the innermost diameter side as the first-stage beating process area in early phase of beating, the annular beating area 61 at the outermost diameter side as the rough beating process area for beating roughly communicating with the supply port 45a, and the finish beating process area communicating with the discharge port 45b for beating finally as the third-stage beating process area in the final phase of beating, and the annular beating area 160 interposed between the annular beating areas 60, 61 at the innermost and outermost diameter side is the rough-finish beating process area for communicating with the both beating areas for beating roughly and finally.

The rough beating process area 60 for beating roughly is set to have a larger volume than the rough-finish beating process area for beating roughly and finally, and the rough-finish beating process area 160 for beating roughly and finally is set to have a larger volume than the finish beating process area 61 for beating finally.

In these annular beating areas 60, 160, 61, the opposite sides 41a, 42a of the pair of opposite beating disks 41, 42 are formed in flat planes, and on these opposite sides 41a, 42a, a plurality of beating blades 65a, 65b, ..., 165a, 165b, ..., and 66a, 66b, ... are disposed individually at specified arrangement pitches in the circumferential direction.

In the illustrated preferred embodiment, these beating blades 65a, 65b, ..., 165a, 165b, ..., and 66a, 66b, ... are formed as arrangement composition patterns formed straightly in the radiation direction as shown in FIG. 11A and FIG. 11B, same as in Embodiment 1, but the arrangement composition patterns of these beating blades may be set appropriately depending on the purpose including the execution conditions.

The beating blades 65a, 65b, ..., 165a, 165b, ..., and 66a, 66b, ... of the arrangement composition patterns as in the illustrated preferred embodiment may apply not only the centrifugal force acting on the used paper pulp UPP flowing and passing in the annular beating areas 60, 61 by the rotation of the rotating side beating disk 41, but also the pumping action for forcing out the used paper pulp UPP continuously to the outside in the radiation direction.

The blade tip interval H of these mutually opposing beating blades 65a, 65b, ..., 165a, 165b, ..., and 66a, 66b, ... is set at maximum in the blade tip interval H1 in the annular beating area at the innermost diameter side (in this preferred embodiment, the rough beating process area) 60, and at minimum in the blade tip interval H2 in the annular beating area at the outermost diameter side (in this preferred embodiment, the finish beating process area) 61, and the blade tip interval H3 is intermediate in the annular beating area existing between these annular beating areas 60, 61 (in this preferred embodiment, the rough-finish beating process area) 160.

The blade tip interval H2 in the annular beating area at the innermost diameter side (in this preferred embodiment, the finish beating process area) 61 is set at a finish beating dimension capable of fibrillating the used paper pulp UPP.

In this manner, by the drive motor 46 of the drive source, the rotating side beating disk 41 is rotated and driven at high speed (1800 rpm to 3600 rpm) on the fixed side beating disk 42, and the used paper pulp UPP flowing in and supplied from the support port 45a flows and passes in the clockwise direction (arrow direction) in FIG. 11B in the beating gap R between the beating disks 41, 42 (the rough beating process area 60, rough-finish beating process area 160, and finish beating process area 61), and by the cooperative action of the mutually opposing beating blades 65a, 65b, ..., 165a, 165b, ..., and 66a, 66b, ..., the used paper pulp is pressed and beaten in the continuous beating processes of three stages from the rough beating process (rough beating process area 60) to the rough-finish beating process (rough-finish beating process area 160) and the finish beating process (finish beating process area 61).

More specifically, in the rough beating process area 60, the blade tip interval H1 of the beating blades 65a, 65b, ... is set at an interval dimension (for example, about 1.00 mm) corresponding to the fiber size of the used paper pulp UPP macerated in the previous step of macerating process, and the used paper pulp UPP supplied into the rough beating process area 60 from the supply port 45a of the fixed side beating disk 42 through the inlet 50 is roughly beaten by the beating blades 65a, 65b, ..., and is sent out to the outside in the radial direction by the action of the centrifugal force and the pump action of the beating blades 65a, 65b, ..., and flows into the rough-finish beating process area 160 by way of the communication port 62a.

In this rough-finish beating process area 160, the blade tip interval H3 of the beating blades 165a, 165b, .., is set an intermediate interval dimension of the blade tip interval H1 of the beating blades 65a, 65b, .., and the blade tip interval H2 of the beating blades 66a, 66b, ... (for example, about 0.20 to 0.50 mm), and the used paper pulp UPP supplied into the rough-finish beating process area 160 from the rough beating process area 60 through the communication port 62a is beaten roughly and finally by the beating blades 165a, 165b, ..., and sent out to the outside in the radial direction by the action of the centrifugal force and the pump action of the beating blades 165a, 165b, ..., and flows into the finish beating process area 61 by way of the communication port 162a.

In the finish beating process area 61, the blade tip interval H2 of the beating blades 66a, 66b, ... is set an interval dimension capable of beating the used paper pulp UPP to a desired finish fiber size, that is, capable of fibrillating (for example, about 0.05 to 0.1 mm), and the used paper pulp UPP supplied into the finish beating process area 61 from the rough beating process area 60 through the communication port 62a is pressed and beaten finally at high pressure by the beating blades 66a, 66b, ..., and sent out to the outside in the radial direction by the action of the centrifugal force and the pump action of the beating blades 66a, 66b, ..., and is discharged from the outlet 51 and further from the discharge port 45b, and finally fibrillated to a desired size determined by the blade tip interval H2 of the beating blades 66a, 66b, ..., and used paper pulp UPP is obtained.

In the meantime, the blade tip intervals H1, H2, H3 are determined appropriately depending on the purpose including specific execution conditions, in consideration of other design conditions such as configuration composition patterns of beating blades 65a, 65b, ..., 165a, 165b, ..., and 66a, 66b, ....

As clear from the description herein, the beating process in this preferred embodiment is executed at the beating gap R consisting of three continuous stages of the annular beating process areas 60, 160, and 61, from the rough beating process to the finish beating process, and therefore as compared with Embodiment 1, the used paper pulp UPP is more hardly clogged, and smooth beating is realized.

The other structures and actions are same as in Embodiment 1.

### Embodiment 4

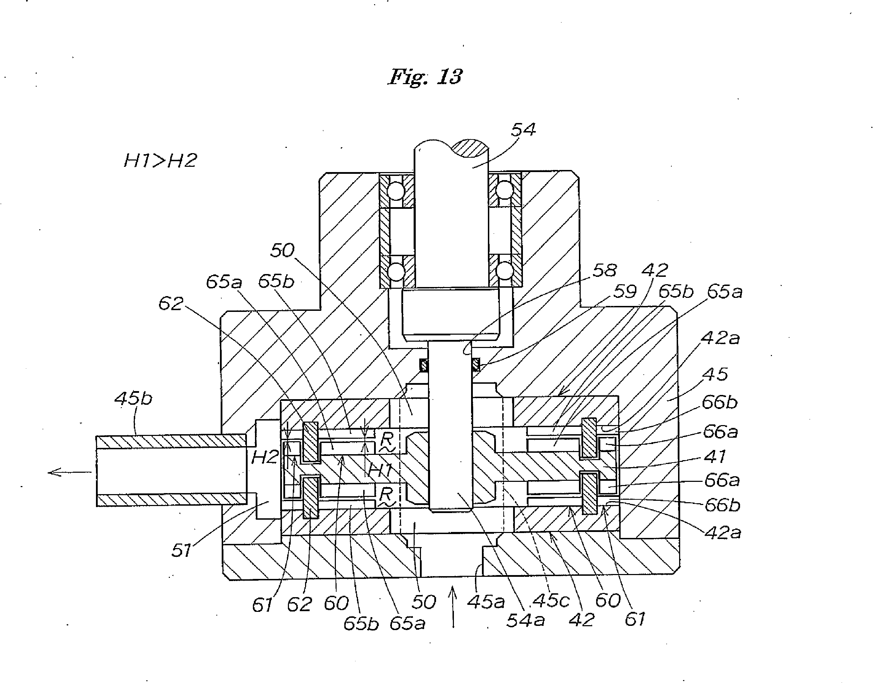

This preferred embodiment is shown in FIG. 13, in which only the structure of the beating machine 40 of the pulp making unit 2 in Embodiment 1 is modified.

That is, the beating machine 40 of the preferred embodiment is composed as a so-called double disk refiner composed of two fixed side beating disks 42, 42, and a rotating side beating disk 41 interposed between these two beating disks 42, 42.

More specifically, in the beating machine 40, the pair of fixed side beating disk 42, 42 are fixed and disposed at mutually opposite upper and lower inner sides of the beating tub 45, and between these two fixed side beating disks 42, 42, the rotating side beating disk 41 is disposed concentrically and rotatably across tiny beating gaps R, R to these fixed side beating disks 42, 42, and although not specifically shown, the rotating side beating disk 41 is driven by and coupled to the drive motor 46, not shown, by way of the rotation main shaft 54.

In a central position of the both fixed side beating disks 42, 42, inlets 50, 50 communicating with the supply port 45a of the beating tub 45 are formed, and the outer peripheral edge of the three beating disks 42, 42, 41 forms the outlet 51 communicating with the discharge port 45b of the beating tub 42. In the meantime, the inlet 50 of the upper side fixed side beating disk 42 communicates with the supply port 45a through the communication path 45c of the beating tub 45.

The specific structure of the both upper and lower beating gaps R, R is same as in the structure of the beating gap R in Embodiment 1.

In the beating machine 40 having such configuration, since two upper and lower beating gaps R, R are formed in the rotating side beating disk 41, as compared with Embodiment 1, a large volume of used paper pulp UPP can be beaten.

The other structures and actions are same as in Embodiment 1.

### Embodiment 5

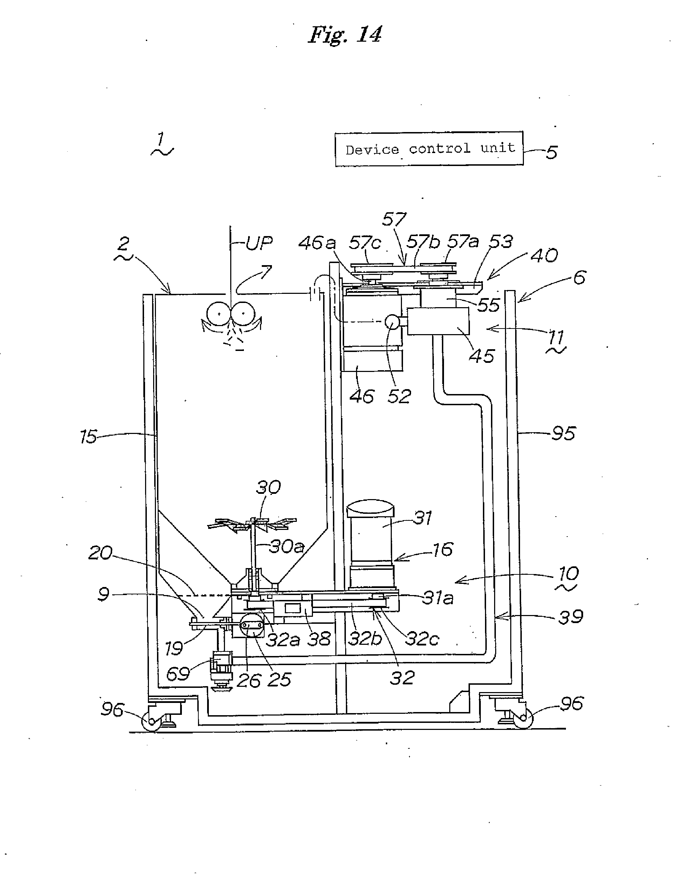

This preferred embodiment is shown in FIG. 14, in which the structure of the macerating unit 10 of the pulp making unit 2 in Embodiment 1 is modified.

That is, in the used paper recycling apparatus 1 of the preferred embodiment, a shredder part (shredder means) 160 is provided at a charging port 7 of the macerating tub 15 of the macerating unit 10, and the used paper UP charged into the charging port 7 is preliminarily shredded by the shredder part 160, so that the macerating and beating operation by the agitating device 16 may be enhanced in efficiency. A specific structure of the shredder unit 160 same as in the conventionally known shredder, having a basic structure for cutting the used paper UP into small paper pieces (double cutting type, cross cutting type, etc.).

The other structures and actions are same as in Embodiment 1.

The foregoing Embodiments 1 to 5 merely show preferable embodiments of the present invention, and the invention is not limited to these illustrated preferred embodiments alone, but may be changed and modified in various forms within the specified scope thereof.

For example, in the illustrated preferred embodiments, the circulation pump 69 is provided for circulating the used paper pulp UPP by force in the used paper pulp circulation route 39 of the beating unit 11 and supplying into the beating machine 40, but if the beating machine 40 can be disposed at a lower side position from the macerating tub 15, and the used paper pulp UPP can be supplied into the beating machine 40 by gravity, the circulation pump 69 may be omitted.

In the illustrated preferred embodiment, the beating machine 40 is a vertical type having a pair of beating disks 41, 42 disposed in vertical upright position in the axial centers, but it may be formed in a horizontal type with the axial centers in horizontal positions.

The specific preferred embodiments explained in the detailed description of the invention are intended to clarify the technical features of the present invention, and the present invention is not limited by the specific examples alone, but may be varied and modified in various forms within the true spirit of the present invention as specified in the claims herein, and should be interpreted in a wider sense of meaning.

## Claims

1. A pulp making device for manufacturing used paper pulp by macerating and beating used paper, used in a used paper recycling apparatus of furniture size that can be installed at the site of origin of used paper, comprising:
a macerating unit for agitating, grinding, and macerating used paper, and a beating unit for beating the used paper macerated in the macerating unit,
wherein the beating unit has a beating machine provided with at least a pair of beating disks oppositely disposed so as to be rotatable relatively at a close distance, and
the beating machine has a tiny beating gap for executing beating processes of at least two continuous stages from the rough beating process to the finish beating process, provided between the pair of beating disks opposite to each other adjacently, and
the beating gap starts from a supply port formed in a central part of the beating disks, and ends at a discharge port formed on the outer peripheral edge of the beating disks.

2. The pulp making device of the used paper recycling apparatus according to claim 1,
wherein the beating gap is composed of at least two annular beating areas disposed concentrically between opposite sides of the pair of mutually opposite beating disks and separately in the radial direction, and
the annular beating area at the innermost diameter side communicates with the supply port, and the annular beating area at the outermost diameter side communicates with the discharge port.

3. The pulp making device of the used paper recycling apparatus according to claim 2,
wherein the beating gap is composed of two annular beating areas disposed concentrically between opposite sides of the pair of mutually opposite beating disks and separately in the radial direction, and
the annular beating area at the inside diameter side communicates with the supply port to form a rough beating process area for beating roughly, and the annular beating area at the outside diameter side communicates with the discharge port to form a finish beating process area for beating finally.

4. The pulp making device of the used paper recycling apparatus according to claim 2,
wherein the beating gap is composed of three annular beating areas disposed concentrically between opposite sides of the pair of mutually opposite beating disks and separately in the radial direction, and
the annular beating area at the innermost diameter side communicates with the supply port to form a rough beating process area for beating roughly, the annular beating area at the outermost diameter side communicates with the discharge port to form a finish beating process area for beating finally, and an annular beating area interposed between the annular beating areas at the innermost and outermost diameter sides communicates with the both beating areas to form a rough and finish beating process area for beating roughly and finally.

5. The pulp making device of the used paper recycling apparatus according to claim 2,
wherein in each annular beating area, a plurality of beating blades are disposed on the opposite sides of the pair of mutually opposite beating disks, at a specified arrangement pitch in a circumferential direction, and
the blade tip interval of the mutually opposite beating blades is formed to be maximum in the blade tip interval in the annular beating area at the innermost diameter side, and minimum in the blade tip interval in the annular beating area at the outermost diameter side.

6. The pulp making device of the used paper recycling apparatus according to claim 5,
wherein the blade tip interval in the annular beating area at the outermost diameter side is set at a finish beating size for fibrillating the pulp.

7. The pulp making device of the used paper recycling apparatus according to claim 6,
wherein the beating machine includes a beating tub having the supply port for supplying the used paper pulp from the upstream side and the discharge port for discharging the beaten used paper pulp to the downstream side, at least a pair of beating disks provided in this beating tub in a mutually rotatable state, and a rotation drive source for rotating and operating these beating disks relatively, and
the used paper pulp supplied from the supply port passes through the beating gap between the beating disks, and is pressed and beaten in the beating process of at least two continuous stages from the rough beating process to the finish beating process by the cooperative action of the mutually opposite beating blades.

8. The pulp making device of the used paper recycling apparatus according to claim 7,
wherein the beating machine includes a fixed side beating disk fixed at the inner side of the beating tub, a rotating side beating disk oppositely disposed rotatably on the fixed side beating disk, and a rotation drive source for rotating and driving this rotating side beating disk, and
an inlet communicating with the supply port of the beating tub is formed in a central position of the fixed side beating disk, and an outer peripheral edge of the beating gap of the both beating disks is an outlet communicating with the discharge port of the beating tub.

9. The pulp making device of the used paper recycling apparatus according to claim 7,
wherein the beating machine includes a pair of fixed side beating disks fixed at both mutually opposite inner sides of the beating tub, a rotating side beating disk oppositely disposed rotatably on the both fixed side beating disks, between the both fixed side beating disks, and a rotation drive source for rotating and driving this rotating side beating disk, and
an inlet communicating with the supply port of the beating tub is formed in a central position of the both fixed side beating disks, and an outer peripheral edge of these three beating disks is an outlet communicating with the discharge port of the beating tub.

10. The pulp making device of the used paper recycling apparatus according to claim 1,
wherein in the beating unit, a used paper pulp circulation route is formed by disposing the beating machine for beating the used paper pulp, and this used paper pulp circulation route has circulation means for circulating the used paper pulp, and beating control means for controlling the beating machine and the circulation means by mutual interlock, and
the beating control means controls the beating unit to circulate the used paper pulp for a specified time in a circulation system.

11. The pulp making device of the used paper recycling apparatus according to claim 1,
wherein the macerating unit includes a macerating tub having a used paper supply port for feeding and supplying used paper, a discharge port for discharging the macerated used paper pulp to the downstream side, and agitation means provided rotatably in this macerating tub, and the used paper supplied from the used paper supply port is mixed and agitated with water by the agitation means, and macerated and beaten.

12. The pulp making device of the used paper recycling apparatus according to claim 1,
wherein the macerating unit has water supply means for supplying water into the macerating tub.

13. The pulp making device of the used paper recycling apparatus according to claim 11,
wherein shredder means is provided at the used paper supply port of the macerating tub, and the used paper supplied from the used paper supply port is preliminarily shredded by the shredder means, and is agitated by the agitation means.

14. The pulp making device of the used paper recycling apparatus according to claim 11,
wherein the used paper pulp circulation route includes the macerating tub of the macerating unit, and the agitation means of the macerating unit is driven and controlled in the operation of executing the beating process.

15. The pulp making device of the used paper recycling apparatus according to claim 14,
wherein the used paper pulp circulation route is provided with a bypass route including a reserve tub for storing the used paper pulp beaten by the beating machine being connected through changeover means, and
the changeover means is driven and controlled so as to change over and use selectively the macerating tub of the macerating unit and the reserve tub of the bypass route, in the operation of executing the beating process.

16. A used paper recycling apparatus comprising, in an apparatus case of furniture size, a pulp making unit for macerating and beating used paper and manufacturing used paper pulp, a paper making unit for making the used paper pulp manufactured in this pulp making unit and manufacturing recycled paper, and a device control unit for driving and controlling the pulp making unit and the paper making unit in interlock,
wherein the pulp making unit is composed of any pulp making device as set forth in claims 1 to 15.

17. The used paper recycling apparatus according to claim 16, further comprising:
wherein pulp concentration adjusting means for adjusting the concentration of used paper pulp supplied into the paper making unit by adjusting the mixing rate of used paper and water supplied into the apparatus,
wherein this pulp concentration adjusting means includes beating concentration adj usting means for adj usting the beating concentration of used pulp in the pulp making unit corresponding to the beating efficiency of the beating machine, paper making concentration adjusting means for adjusting the paper making concentration of the used paper pulp in the paper making unit corresponding to the finished paper quality of the recycled paper to be regenerated, and pulp concentration control means for driving and controlling the beating concentration adjusting means and the paper making concentration adjusting means in interlock.
